(19) Europäisches Patentamt
European Patent Office
Office européen des brevets

(11) **EP 4 340 235 A1**

(12) **EUROPEAN PATENT APPLICATION**
published in accordance with Art. 153(4) EPC

(43) Date of publication:
**20.03.2024 Bulletin 2024/12**

(21) Application number: **23741968.4**

(22) Date of filing: **14.06.2023**

(51) International Patent Classification (IPC):
*H04B 1/50* (2006.01)        *H04B 1/04* (2006.01)
*H04B 1/3827* (2015.01)        *H04B 1/00* (2006.01)
*H04B 1/40* (2015.01)

(52) Cooperative Patent Classification (CPC):
**H04B 1/00; H04B 1/04; H04B 1/3827; H04B 1/40; H04B 1/50**

(86) International application number:
**PCT/KR2023/008225**

(87) International publication number:
**WO 2024/010239 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.07.2022 KR 20220082815**
**04.08.2022 KR 20220097295**

(71) Applicant: **Samsung Electronics Co., Ltd.**
**Suwon-si, Gyeonggi-do 16677 (KR)**

(72) Inventors:
• **KIM, Seonjun**
**Suwon-si, Gyeonggi-do 16677 (KR)**
• **MOON, Yohan**
**Suwon-si, Gyeonggi-do 16677 (KR)**
• **SEONG, Kihyug**
**Suwon-si, Gyeonggi-do 16677 (KR)**
• **YANG, Dongil**
**Suwon-si, Gyeonggi-do 16677 (KR)**
• **NA, Hyoseok**
**Suwon-si, Gyeonggi-do 16677 (KR)**

(74) Representative: **HGF**
**HGF Limited**
**1 City Walk**
**Leeds LS11 9DX (GB)**

(54) **ELECTRONIC DEVICE AND METHOD FOR DETECTING OBJECT**

(57)    In embodiments, an electronic device includes a processor, a radio frequency (RF) transceiver, a power amplifier (PA), a dual directional coupler, and an antenna connected to the dual directional coupler. The processor is configured to control the RF transceiver to transmit a first signal of a first frequency band with a first transmission power through the PA, the dual directional coupler, and the antenna. The processor is configured to control the RF transceiver to transmit a second signal of a second frequency band lower than the first frequency band through the dual directional coupler and the antenna while the first signal is transmitted. The processor is configured to control the RF transceiver to identify a forward coupling signal of the second signal and a reverse coupling signal of the second signal among signals obtained from the dual directional coupler. The processor is configured to control the RF transceiver to transmit the first signal based at least in part on the forward coupling signal of the second signal and the reverse coupling signal of the second signal with a second transmission power lower than the first transmission power. In addition to this, various embodiments are possible.

FIG. 3

EP 4 340 235 A1

**Description**

**[Technical Field]**

The descriptions below relate to an electronic device and method for sensing an object.

**[Background Art]**

An electronic device may transmit and/or receive a signal through an antenna. The electronic device may use S-parameters of the antenna to recognize a type or a distance of an object adjacent to the electronic device. The object adjacent to the electronic device may cause a change in the S-parameter of the antenna.

**[Disclosure]**

**[Technical Solution]**

In embodiments, an electronic device may include a processor, a radio frequency (RF) transceiver, a power amplifier (PA), a dual directional coupler, and an antenna connected to the dual directional coupler. The processor may be configured to control the RF transceiver to transmit a first signal of a first frequency band with a first transmission power through the PA, the dual directional coupler, and the antenna. The processor may be configured to control the RF transceiver to transmit a second signal of a second frequency band lower than the first frequency band through the dual directional coupler and the antenna while the first signal is transmitted. The processor may be configured to control the RF transceiver to identify a forward coupling signal of the second signal and a reverse coupling signal of the second signal among signals obtained from the dual directional coupler. The processor may be configured to control the RF transceiver to transmit the first signal based at least in part on the forward coupling signal of the second signal and the reverse coupling signal of the second signal with a second transmission power lower than the first transmission power.

In embodiments, a method performed by the electronic device may include transmitting the first signal of the first frequency band with the first transmission power through the antenna. The method may include transmitting the second signal on the second frequency band lower than the first frequency band through the antenna while the first signal is transmitted. The method may include identifying the forward coupling signal of the second signal and the reverse coupling signal of the second signal among signals obtained from the dual directional coupler. The method may include transmitting the first signal based at least in part on the forward coupling signal of the second signal and the reverse coupling signal of the second signal with the second transmission power lower than the first transmission power through the antenna.

In embodiments, the electronic device may include the processor, the radio frequency (RF) transceiver, the power amplifier (PA), a single directional coupler, and the dual directional coupler connected to the single directional coupler. The single directional coupler may include a first port for receiving a first input signal, a second port for outputting a transmission signal, and a third port for receiving a second input signal. The dual directional coupler may include a first port for receiving the transmission signal, a second port for outputting the transmission signal, a third port for providing a forward coupling signal of the transmission signal, and a fourth port for providing a reverse coupling signal of the transmission signal. The electronic device may include an antenna connected to the dual directional coupler, and a switch for connecting the RF transceiver to the third port of the dual directional coupler or the fourth port of the dual directional coupler selectively. A first transmission port of the RF transceiver may be electrically connected to the first port of the single directional coupler. A second transmission port of the RF transceiver may be electrically connected to the third port of the single directional coupler.

In embodiments, the electronic device may include the processor, the radio frequency (RF) transceiver, the power amplifier (PA), the dual directional coupler, and an antenna connected to the dual directional coupler. The processor may be configured to control the RF transceiver to transmit a first signal of a first frequency band through the PA, the dual directional coupler, and the antenna with the first transmission power. The processor may be configured to transmit a second signal of a second frequency band lower than the first frequency band through the dual directional coupler and the antenna while the first signal is transmitted. The processor may be configured to identify the forward coupling signal of the second signal and the reverse coupling signal of the second signal among signals obtained from the dual directional coupler. The processor may be configured to identify that an external object is within a predetermined distance from the electronic device based at least in part on the forward coupling signal of the second signal and the reverse coupling signal of the second signal.

In an embodiment, a Radio Frequency Front End (RFFE) may be provided. The RFFE may comprise a power amplifier (PA) and a dual directional coupler. The RFFE may be connected to a RF transceiver. An antenna may be connected to the dual directional coupler. The RFFE may be configured to receive, from the RF transceiver, a first signal of a first frequency band through the PA and the dual directional coupler and to transmit the first signal to the antenna with a first transmission power. The RFFE may further be configured to receive, from the RF transceiver, a second signal of a second frequency band lower than the first frequency band thorough the dual directional coupler and to transmit the second signal to the antenna while the first signal is transmitted. The RFFE may be configured to output a forward coupling signal of the second signal and a reverse coupling signal of the second signal from the dual directional coupler.

The RFFE may be configured to transmit the first signal based at least in part on the forward coupling signal of the second signal and the reverse coupling signal of the second signal with a second transmission power being lower than the first transmission power.

The RFFE may be implemented as a single chip, a System-on-Chip (SOC), or as an integrated circuit in some examples. However, the RFFE may not be limited thereto, and may be otherwise configured. The RFFE may be installed in an electronic device comprising the RF transceiver, the antenna, and a processor configured to control the RF transceiver and the antenna.

**[Advantageous Effects]**

An electronic device and a method according to embodiments of the present disclosure can improve object detection performance of the electronic device by transmitting a signal on a low-band. Further, a transmission power of a signal can be controlled to change based on the detection of the object.

The effects that can be obtained from the present disclosure are not limited to those described above, and any other effects not mentioned herein will be clearly understood by those having ordinary knowledge in the art to which the present disclosure belongs, from the following description.

**[Description of the Drawings]**

FIG. 1 is a block diagram of an electronic device in a network environment.
FIG. 2A illustrates an example of a single directional coupler according to embodiments.
FIG. 2B illustrates an example of a dual directional coupler according to embodiments.
FIG. 3 illustrates an example of an electronic device including a coupler for a measurement signal, according to embodiments.
FIG. 4 illustrates an example of an electronic device including a switch for selecting one of a transmission path and a reception path according to embodiments.
FIG. 5 illustrates an example of an electronic device including a dual directional coupler using a switching circuit, according to embodiments.
FIG. 6A illustrates an example of an electronic device including an amplifying circuit and a coupler for a measurement signal, according to embodiments.
FIG. 6B illustrates an example of an electronic device including a coupler and a switch for providing a measurement signal using at least a part of a configuration for transmitting and/or receiving a communication signal, according to embodiments.
FIG. 7 illustrates an example of an electronic device including a diplexer for a measurement signal, according to embodiments.
FIG. 8A illustrates an example of an electronic device including an amplifying circuit and a diplexer for a measurement signal, according to embodiments.
FIG. 8B illustrates an example of an electronic device including a diplexer and a switch for providing a measurement signal by using at least a part of a configuration for transmitting and/or receiving a communication signal, according to embodiments.
FIG. 9 illustrates another example of a dual directional coupler according to embodiments.
FIG. 10 illustrates an example of extracting signal components for object detection, according to embodiments.
FIG. 11 illustrates an operation flow of an electronic device for detecting an object according to embodiments.
FIG. 12 illustrates an operation flow of an electronic device for changing transmission power according to embodiments.
FIG. 13 illustrates an operation flow of an electronic device for extracting signal components for object detection, according to embodiments.
FIG. 14A illustrates an example of object detection in a mid-band according to embodiments.
FIG. 14B illustrates an example of object detection in a low-band according to embodiments.

**[Mode for Invention]**

Terms used in the present disclosure are used only to describe a specific embodiment, and may not be intended to limit the scope of another embodiment. A singular expression may include a plural expression unless it is clearly meant differently in the context. The terms used herein, including a technical or scientific term, may have the same meaning as generally understood by a person having ordinary knowledge in the technical field described in the present disclosure. Terms defined in a general dictionary among the terms used in the present disclosure may be interpreted with the same or similar meaning as a contextual meaning of related technology, and unless clearly defined in the present disclosure, it is not interpreted in an ideal or excessively formal meaning. In some cases, even terms defined in the present disclosure cannot be interpreted to exclude embodiments of the present disclosure.

In various embodiments of the present disclosure described below, a hardware approach is described as an example. However, since the various embodiments of the present disclosure include technology that use both hardware and software, the various embodiments of the present disclosure do not exclude a software-based approach.

A term referring to a signal (e.g., signal, transmission signal, reception signal, forward signal, reverse signal, coupling signal, compound signal, digital signal, analog signal, modulation signal), a term referring to a time resource (e.g., symbol, slot, subframe, radio frame), a term for an operational state (e.g., step, operation, procedure), a term referring to a channel, a term referring to a network entity, a term referring to a component of a device, and the like used in the following description are illustrated for convenience of description. Thus, the present disclosure is not limited to terms described below, and another term having an equivalent technical meaning may be used.

A term referring to a component of an electronic device (e.g., module, antenna, antenna element, circuit, processor, chip, component, device), a term referring to a circuit or a component of a circuit (e.g., isolation circuit, communication circuit, switching circuit, RF signal line, antenna line, RF path, RF module, RF circuit, splitter, divider, coupler, combiner), and the like used in the following description are illustrated for convenience of description. Thus, the present disclosure is not limited to terms described below, and another term having an equivalent technical meaning may be used. In addition, a term such as ', and the like used below may mean at least one shape structure, or may mean a unit that processes a function.

In addition, in the present disclosure, in order to determine whether a specific condition is satisfied or fulfilled, an expression of more than or less than may be used, but this is only a description for expressing an example, and does not exclude description of more than or equal to or less than or equal to. A condition described as 'more than or equal to' may be replaced with ' more than', a condition described as 'less than or equal to' may be replaced with 'less than', and a condition described as 'more than or equal to and less than' may be replaced with 'more than and less than or equal to'. In addition, hereinafter, 'A to B' means at least one of elements from A (including A) and to B (including B).

Hereinafter, the present disclosure relates to a device and a method for detecting an object by measuring S-parameters in a wireless communication system. Detecting an objection may be understood as detecting or identifying that an external object is within a predetermined distance from the device. Specifically, the present disclosure describes a technology for detecting a user's grip operation and changing transmission power of an electronic device through a change of reflection coefficient in the wireless communication system. S-parameters may otherwise be known as scattering parameters and would be understood as parameters for representing characteristics of electronic circuits and components.

In the present disclosure, a low-band, a mid-band, and a high-band may be defined for discrimination according to frequency size. For example, the low-band may mean a frequency band having a range of less than about 1 GHz. The mid-band may mean a frequency band having a range of less than about 2.3 GHz. The high-band may mean a frequency band having a range of about 2.3 GHz or more. Meanwhile, the above-described reference values of the frequency band of 1 GHz and 2.3 GHz are an example, and it goes without saying that another value having the same technical meaning may be used.

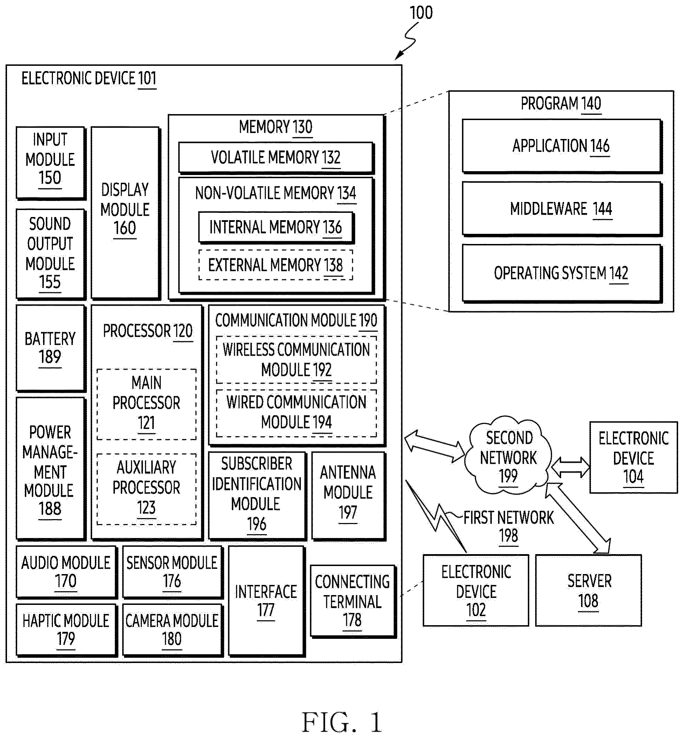

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas.

The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

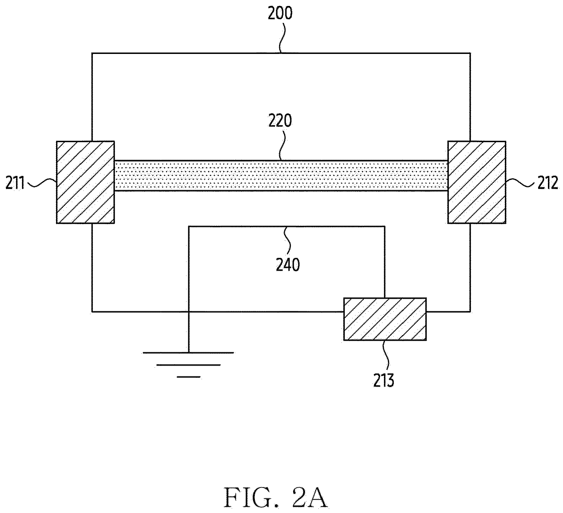

FIG. 2A illustrates an example of a single directional coupler according to embodiments. A coupler refers to an RF passive element for distributing or coupling signal power.

Referring to FIG. 2A, a single directional coupler 200 may include three ports. The three ports may include a first port 211 for inputting a transmission signal, a second port 212 for outputting the transmission signal, or a third port 213 for coupling. Hereinafter, the single directional coupler 200 may be described for use with the transmission signal as an example, but it should be understood that the single directional coupler 200 may be used for a reception signal. In this case, the three ports of the single directional coupler 200 may include the first port 211 for outputting the reception signal, the second port 212 for inputting the reception signal, or the third port 213 for coupling. For example, the single directional coupler 200 may be a 3-port coupler. The single directional coupler 200 may include an RF line 220 for power transmission between the first port 211 and the second port 212. The first port 211 may be referred to as an input port. The second port 212 may be referred to as an output port. The single directional coupler 200 may include a coupling line 240 connected to the third port 213 and adjacent to the RF line 220. Through the coupling line 240, the single directional coupler 200 may transmit power to the third port 213 or may obtain power from the third port 213. The third port 213 may be referred to as a coupling port. According to an embodiment, the single directional coupler 200 may output a signal applied through the third port 213 and a signal applied through the first port 211 together through the second port 212.

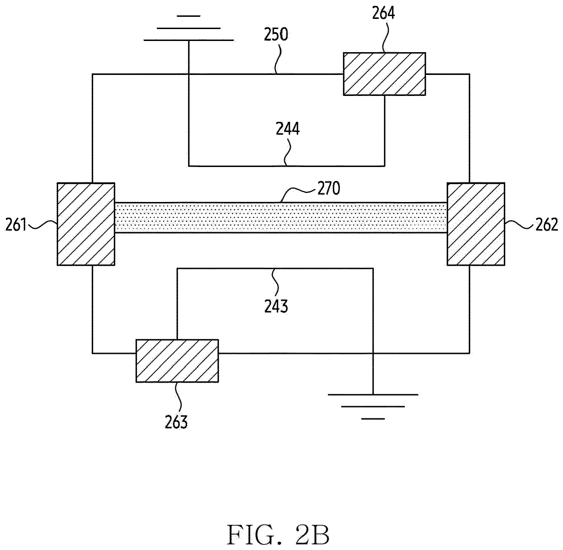

FIG. 2B illustrates an example of a dual directional coupler according to embodiments. The dual directional coupler, as a directional coupler, may be inserted into a line between an RF source and a load. The dual directional coupler may provide RF power corresponding to the forward direction and power reflected from the load to the source. The dual directional coupler means an RF element for extracting a coupling signal of a signal transmitted through an antenna (hereinafter, a forward coupling signal) and a coupling signal of a signal received through an antenna (hereinafter, a reverse coupling signal). The dual directional coupler may be referred to as a dual coupler or a dual directional coupler.

Referring to FIG. 2B, a dual directional coupler 250 may include four ports. The four ports may include a first port 261 for inputting a signal, a second port 262 for outputting a signal, a third port 263 for the forward coupling signal, and a fourth port 264 for the reverse coupling signal. The dual directional coupler 250 may include an RF line 270 for power transmission between the first port 261 and the second port 262. The first port 261 may be referred to as an input port. The second port 262 may be referred to as an output port. The dual directional coupler 250 may include a first coupling line 243 connected to the third port 263 and adjacent to the RF line 270. Through the first coupling line 243, the dual directional coupler 250 may output the forward coupling signal to the third port 263. The dual directional coupler 250 may include a second coupling line 244 connected to the fourth port 264 and adjacent to the RF line 270. Through the second coupling line 244, the dual directional coupler 250 may output the reverse coupling signal to the fourth port 264. The third port 263 may be referred to as a forward coupling port. The fourth port 264 may be referred to as a reverse coupling port. The direction of the third port 263 from the termination impedance of the first coupling line 243 and the direction of the fourth port 264 from the termination impedance of the second coupling line 244 may be opposite.

According to an embodiment, the antenna may be electrically connected to the dual directional coupler 250. A signal inputted to the dual directional coupler 250 is a transmission signal and may be radiated through the RF line 270 and the connected antenna. According to an embodiment, the first coupling line 243 of the dual directional coupler 250 may obtain a signal component according to a traveling direction of the signal. The dual directional coupler 250 may output the forward coupling signal, which is the signal component corresponding to the traveling direction of an input signal, through the third port 263. Meanwhile, due to the impedance of the antenna, at least some of the signals transmitted to the antenna may be reflected. The reflected signal is inputted to the dual directional coupler 250 again. According to an embodiment, the second coupling line 244 of the dual directional coupler 250 may obtain the reflected signal component. The dual directional coupler 250 may output the reverse coupling signal, which is the signal component corresponding to a reverse direction of the input signal, through the fourth port 264.

According to an embodiment, the forward coupling signal and the reverse coupling signal extracted through the dual directional coupler 250 may be used to calculate the reflected power ratio, such as reflection coefficient (e.g., S11 parameter), return loss, or voltage standing wave ratio (VSWR). Hereinafter, the reflection coefficient is illustrated as a parameter for detecting an object (e.g., hand) according to embodiments, but this exemplary description is not interpreted as limiting the use of other parameters. The parameter (e.g., return loss, VSWR) having the same or similar technical meaning as the reflection coefficient may be used to detect the object according to embodiments.

The reflection coefficient is dependent on the impedance of the antenna. The antenna impedance may be changed due to various factors (e.g., grip, or proximity to an external object). For example, due to the user's grip motion, a change of antenna impedance according to the permittivity of the antenna may be caused. The change of the antenna impedance may change the reflection coefficient. For example, the reflection coefficient may be changed due to the user's grip motion. An electronic device may detect the object (e.g., hand) by identifying the change of the reflection coefficient of the antenna. For example, it may be determined that an object is detected when the reflection coefficient is equal to (and/or greater than) a threshold reflection coefficient, or when the change of the reflection coefficient is equal to (and/or greater than) a threshold change in the reflection coefficient.

The electronic device may transmit a signal of a various frequency band. A coupler electrically connected to the antenna may provide the forward coupling signal of the signal and the reverse coupling signal of the signal to an RF transceiver. In an embodiment, the processor may measure the reflection coefficient based on the forward coupling signal of the signal and the reverse coupling signal of the signal. In a relatively high frequency band, a wide bandwidth may be used. In a relatively low frequency band, a narrow bandwidth may be used. For example, the frequency band may be mid-band (e.g., a frequency band having a range of about 1 GHz or more and less than about 2.3 GHz) or high-band (e.g., a frequency band having a range of about 2.3 GHz or more).

In broadband, a passing bandwidth of a graph of an S-parameter (e.g., transmission coefficient ($S_{12}$ parameter), reflection coefficient (Sn parameter)) may be widely formed. Whenever the antenna impedance changes due to an external factor, the graph may change. The effect due to such distortion of the graph may be relatively insignificant as the bandwidth is wider. For example, an S-parameter measurement in a high frequency band may not be easy to detect the external factor (e.g., grip detection, proximity detection). For example, measurement of the reflection coefficient using a signal transmitted on the mid-band or the high-band may have difficulty detecting the object.

In order to solve the above difficulty, embodiments of the present disclosure may suggest a method and an electronic device for transmitting a measurement signal in a frequency band lower than the frequency band of a signal transmitted for communication and detecting an object based on an S parameter for the measurement signal.

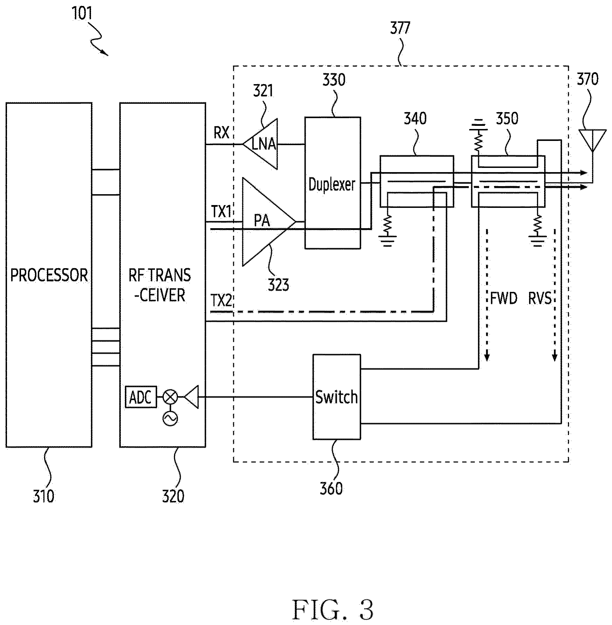

FIG. 3 illustrates an example of an electronic device including a coupler for a measurement signal, according to embodiments. The measurement signal means a signal used to obtain an S-parameter according to embodiments. The electronic device (e.g., an electronic device 101 of FIG. 1) according to embodiments may transmit the measurement signal at a lower frequency than a frequency band of a signal (hereinafter, communication signal) transmitted to another electronic device. According to an embodiment, a radio frequency front end (RFFE) of the electronic device 101 may include at least one coupler for providing the measurement signal to a path for the communication signal. For example, the at least one coupler may be the single directional coupler 200 of Figure 2A or the dual directional coupler 250 of Figure 2B.

Referring to FIG. 3, the electronic device 101 may include a processor 310, an RF transceiver 320, an RFFE 377, and an antenna 370.

The electronic device 101 may include the processor 310. The processor 310 may include, for example, at least one of an application processor (AP) (e.g., a main processor 121 of FIG. 1) or a communication processor (CP) (e.g., an auxiliary processor 123 of FIG. 1). For example, a processor may include the AP and the CP. For example, the processor may include the AP. For example, the processor may include the CP.

The processor 310 may generate a baseband signal. The processor 310 may control the RF transceiver 320 to process the generated baseband signal. According to embodiments, the processor 310 may transmit a first signal. For example, the first signal may mean the communication signal for being transmitted to another electronic device (e.g., base station, another terminal). The processor 310 may control the RF transceiver 320 to transmit the first signal through the antenna 370. The first signal may be transmitted to the other electronic device. The processor 310 may control the RF transceiver 320 so that the first signal is transmitted in the frequency band capable of communicating with the other electronic device. According to an embodiment, the frequency band in which the first signal is transmitted may be a mid-band (e.g., a frequency band having a range of 1 GHz or more and less than about 2.3 GHz) or a high-band (e.g., a frequency band having a range of 2.3 GHz or more).

According to embodiments, the processor 310 may transmit a second signal. The second signal may be a measurement signal for object detection. The processor 310 may control the RF transceiver 320 to transmit the second signal through the antenna 370. The second signal may be transmitted at a frequency (e.g., low-band frequency) for the object detection according to embodiments. The frequency set to transmit the second signal may provide a relatively large antenna impedance change due to an external factor (e.g., grip of the object or proximity of the object). In an embodiment, the processor 310 may control the RF transceiver 320 so that the second signal is transmitted in a frequency band lower than the frequency band of the first signal. According to an embodiment, a frequency range in which the second signal is transmitted may be a low-band (e.g., a frequency band having a range of less than 1 GHz).

The electronic device 101 may include the RF transceiver 320. For example, the RF transceiver 320 may be implemented as a single chip (e.g., RFIC chip) or as a part of a single package. The RF transceiver 320 may include a digital to analog converter (DAC) for converting a digital signal into an analog signal. The RF transceiver 320 may include a mixer and an oscillator (e.g., a local oscillator (LO)) for up-conversion. The RF transceiver 320 may convert the baseband signal generated by the processor 310 into an RF signal. The RF transceiver 320 may include an analog to digital converter (ADC) for converting the analog signal into the digital signal. The RF transceiver 320 may include the mixer and the oscillator for down-conversion. The RF transceiver 320 may convert the RF signal received from the antenna 370 into the baseband signal so that it may be processed by the processor 310.

According to embodiments, the RF transceiver 320 may receive signals fed back from a component (e.g., a dual directional coupler 350) of the RFFE 377 electrically connected to the antenna 370. For example, the RF transceiver 320 may include a feedback receive port (FBRX). According to an embodiment, the RF transceiver 320 may receive a forward coupling signal and a reverse coupling signal through the dual directional coupler 350 and/or a switch 360 of the RFFE 377. According to an embodiment, the RF transceiver 320 may receive the forward coupling signal and the reverse coupling signal at different time. The RF transceiver 320 may receive the forward coupling signal. The RF transceiver 320 may receive the reverse coupling signal. The RF transceiver 320 may include components for receiving the forward coupling signal and the reverse coupling signal. For example, the components may include a low noise amplifier (LNA), the ADC, the mixer, and the oscillator.

According to an embodiment, the RF transceiver 320 may include one or more transmission ports. For example, the one or more transmission ports may include a first transmission port TX1 and a second transmission port TX2. The RF transceiver 320 may include one or more receive ports. For example, the one or more receive ports may include a receive port RX.

According to an embodiment, by the RF transceiver 320, the first signal may be transmitted in a frequency band capable of communicating with the other electronic device. The oscillator of the RF transceiver 320 may provide a frequency for the up-conversion. The mixer of the RF transceiver 320 may perform conversion into the frequency band capable of communicating with the other electronic device for the first signal. The first transmission port TX1 of the RF transceiver 320 may output the first signal.

According to an embodiment, by the RF transceiver 320, the second signal may be transmitted in the frequency band lower than the frequency band of the first signal. The oscillator of the RF transceiver 320 may provide a frequency for the up-conversion. The mixer of the RF transceiver 320 may perform up-conversion to the frequency band capable of communicating with the other electronic device for the second signal. The second transmission port TX2 of the RF transceiver 320 may output the second signal.

The RFFE 377 of the electronic device 101 may transmit a transmission signal from the RF transceiver 320 to the antenna 370 or may transmit a reception signal from the antenna 370 to the RF transceiver 320. According to an embodiment, the RFFE 377 of the electronic device 101 may include a low noise amplifier (LNA) 321, a duplexer 330, a single directional coupler 340, and/or the dual directional coupler 350, for a reception path. The signal received through the antenna 370 may be transmitted to the RF transceiver 320 through the reception path. According to an embodiment, the RFFE 377 of the electronic device 101 may include a power amplifier (PA) 323, the duplexer 330, the single directional coupler 340, and/or the dual directional coupler 350, for a transmission path. The RF signal generated by the RF transceiver 320 may be radiated into the air through the transmission path and the antenna 370. According to embodiments, the first signal and the second signal may be radiated through the antenna 370.

According to an embodiment, the RFFE 377 of the electronic device 101 may include the dual directional coupler 350 and/or the switch 360 electrically connected to a coupling path. The coupling path may mean a path through which a signal fed back from the antenna 370, for example, a signal coupled by the dual directional coupler 350, is transmitted to the RF transceiver 320. The dual directional coupler 350 may output the forward coupling signal (FWD) and the reverse coupling signal (RVS). The dual directional coupler 350 is a dual directional coupler and may output the forward coupling signal and the reverse coupling signal. The switch 360 may optionally select a path to provide the forward coupling signal to the RF transceiver 320 or to provide the reverse coupling signal to the RF transceiver 320. For example, the switch 360 may include a single pole single through (SPDT) switch.

In case that the S-parameter is measured based on the first signal (e.g., communication signal), if the change in the antenna impedance due to the external factor in the frequency band is small, it may not be sufficient to detect the object. For example, discrimination performance for each required situation may be deteriorated. In an embodiment, in order to increase the discrimination performance, the second signal (e.g., measurement signal) may be transmitted at the frequency of the frequency band (e.g., low-band, 700 to 915 MHz) with the large change in the antenna impedance due to the external factor. In other words, by transmitting the second signal at a lower frequency than the frequency of the first signal, object detection based on the second signal may be improved.

The first signal outputted from the RF transceiver 320 may be amplified through a PA 323. In an embodiment, the amplified first signal may be inputted to the dual directional coupler 350 through the single directional coupler 340. The dual directional coupler 350 may provide the forward coupling signal of the first signal and the reverse coupling signal of the first signal to the RF transceiver 320. For example, the power of the first signal outputted from the RF transceiver 320 may be about 0 dBm (decibel milliwatts). The power of the amplified first signal inputted to the dual directional coupler 350 may be about 25 dBm. The power of the forward coupling signal of the first signal inputted to the RF transceiver 320 may be about 0 dBm. The power of the reverse coupling signal of the first signal inputted to the RF transceiver 320 may be about 0 dBm.

In an embodiment, the second signal outputted from the RF transceiver 320 may be inputted to the dual directional coupler 350 through a coupling port of the single directional coupler 340. The dual directional coupler 350 may provide the forward coupling signal of the second signal and the reverse coupling signal of the second signal to the RF transceiver 320. For example, the power of the second signal outputted from the RF transceiver 320 may be about 0 dBm. The power of the second signal inputted to the dual directional coupler 350 may be about -25 dBm. The power of the forward coupling signal of the second signal inputted to the RF transceiver 320 may be about -50 dBm. The power of the reverse coupling signal of the second signal inputted to the RF transceiver 320 may be about -50 dBm.

In an embodiment, in case that the first signal is transmitted, through the dual directional coupler 350 and/or the switch 360, the forward coupling signal of the first signal and the reverse coupling signal of the first signal may be transmitted to the RF transceiver 320. In an embodiment, in case that the second signal is transmitted, through the dual directional coupler 350 and/or the switch 360, the forward coupling signal of the second signal and the reverse coupling signal of the second signal may be transmitted to the RF transceiver 320. In an embodiment, in case that the second signal is transmitted while the first signal is transmitted, through the dual directional coupler 350 and the switch 360, the forward coupling signal and the reverse coupling signal may be transmitted to the RF transceiver 320. For example, the forward coupling signal may include the forward coupling signal of the first signal and the forward coupling signal of the second signal. For example, the reverse coupling signal may include the reverse coupling signal of the first signal and the reverse coupling signal of the second signal.

According to embodiments, the processor 310 may control the RF transceiver 320 to obtain the forward coupling signal of the second signal and the reverse coupling signal of the second signal. Through at least some of the LNA, the mixer, or the oscillator of the RF transceiver 320, the forward coupling signal of the second signal may be identified from the forward coupling signal obtained from the dual directional coupler 350. The processor 310 may obtain the forward coupling signal of the second signal and the reverse coupling signal of the second signal, demodulated through the RF transceiver 320.

According to embodiments, the forward coupling signal and the reverse coupling signal of the second signal may be used to measure the S-parameter (e.g., $S_{11}$, $S_{21}$) of the antenna 370. In an embodiment, the processor 310 may measure the reflection coefficient based on the forward coupling signal of the second signal and the reverse coupling signal of the second signal. For example, the reflection coefficient $S_{11}$ may be calculated based on the following equation.

【equation 1】

$$Reflection\ coefficient = \frac{S_{fwd}}{S_{rev}}$$

*Reflection coefficient* represents the reflection coefficient. $s_{fwd}$ represents the forward coupling signal. $s_{rev}$ represents the reverse coupling signal.

Instead of the reflection coefficient, reflection loss may be used as a parameter having substantially the same technical meaning. For example, the reflection loss may be calculated based on the following equation.

【equation 2】

$$Return\ Loss\ [dB] = 10 * \log_{10}\left(\sum |s_{fwd}|^2 - \sum |s_{rev}|^2\right)$$

*Return Loss* represents the reflection loss. $s_{fwd}$ represents the forward coupling signal. $s_{rev}$ represents the reverse coupling signal.

In an embodiment, the processor 310 may check the amount of the change in the antenna impedance based on the forward coupling signal of the second signal and the reverse coupling signal of the second signal. For example, the processor 310 may identify a change in the reflection coefficient. In an embodiment, the processor 310 may detect the object based on the change in the reflection coefficient. For example, the processor 310 may detect the object when the reflection coefficient or the change in the reflection coefficient is equal to (and/or greater than) a threshold value. According to an embodiment, the processor 310 may detect the grip of the object, although it should be understood that objects other than a user's hand may be detected. In an embodiment, the processor 310 may perform a designated function in response to the detection. According to an embodiment, the processor 310 may lower the transmission power of the communication signal so that a condition for a specific absorption ratio (SAR) is satisfied in the grip state. According to an embodiment, in response to the grip detection, the processor 310 may perform a designated function for each application (e.g., activation of a proximity sensor during a call). The processor 310 may further detect that the object is no longer present, and may increase the transmission power of the communication signal in response to the detection that the object is no longer present.

As described above, by transmitting the measurement signal at the frequency of the frequency band lower than the frequency band of the communication signal, the electronic device 101 may more effectively detect the object, similar to the function of a grip sensor. The RFFE 377 of the electronic device 101 according to embodiments may include the coupler (e.g., the single directional coupler 340) for coupling the communication signal and the measurement signal so that the measurement signal may be transmitted along at least partially the same path as the communication signal, while the communication signal is transmitted through the coupler (e.g., the dual directional coupler 350) and the antenna (e.g., the antenna 370). Through the above-described RFFE 377, by measuring the S-parameter for the same antenna (e.g., the antenna 370) by using a signal having a frequency lower than the communication frequency, it may be easy to detect the object from the change in the reflection coefficient.

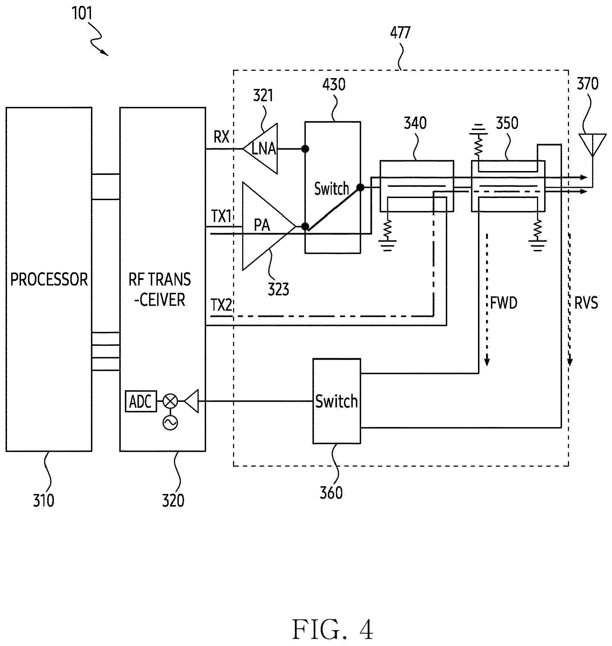

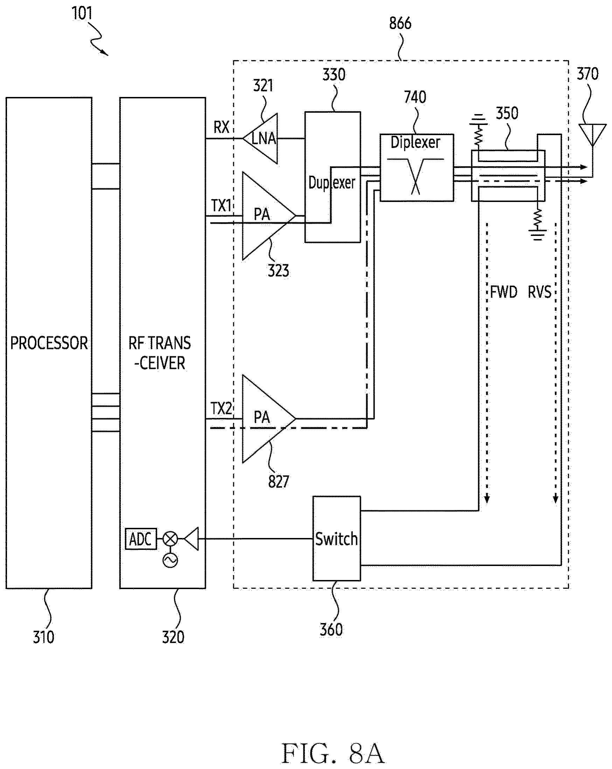

Although the RFFE structure including the single directional coupler 340 is illustrated in FIG. 3, the RFFE structure illustrated in FIG. 3 is not to be interpreted as limiting other embodiments of the present disclosure. Hereinafter, in FIGS. 4 to 8B, a changed RFFE structure is described as some component of the components of the RFFE structure of FIG. 3 is omitted, another component is added based on the RFFE structure of FIG. 3, or some component of the components of the RFFE structure of FIG. 3 is substituted.

FIG. 4 illustrates an example of an electronic device including a switch for selecting one of a transmission path and a reception path according to embodiments. An RFFE of the electronic device (e.g., an electronic device 101 of FIG. 1) illustrated in FIG. 3 may include a duplexer 330. However, the duplexer 330 is only an exemplary component of an RF path in the RFFE according to embodiments, and embodiments of the present disclosure are not limited thereto.

Referring to FIG. 4, the electronic device 101 may include a processor 310, an RF transceiver 320, an RFFE 477 including a switch 430, and an antenna 370. A description of the processor 310, the RF transceiver 320, and the antenna 370 illustrated in FIG. 4 may be referred to FIG. 3.

According to an embodiment, the RFFE 477 of the electronic device 101 of FIG. 4 may include the switch 430 instead of the duplexer 330, unlike FIG. 3. In the RFFE 477 of the electronic device 101 of FIG. 4, a description of other components (e.g., LNA 321, PA 323, single directional coupler 340, dual directional coupler 350, and switch 360) other than the switch 430 may be referred to FIG. 3. The electronic device 101 may transmit a first signal to another electronic device. As illustrated in FIG. 3, in case that the duplex mode for the first signal is a frequency division duplex (FDD), the duplexer 330 may be positioned in the RF path to distinguish the transmission frequency from the reception frequency. However, in case that the duplex mode for the first signal is a time duplex division (TDD), the transmission frequency and the reception frequency are the same. Since it is not necessary to distinguish the transmission frequency from the reception frequency, the RFFE 477 of the electronic device 101 of FIG. 4 may include the switch 430 for selecting the transmission path (TX1) or the reception path (RX) of the antenna 370 instead of the duplexer 330.

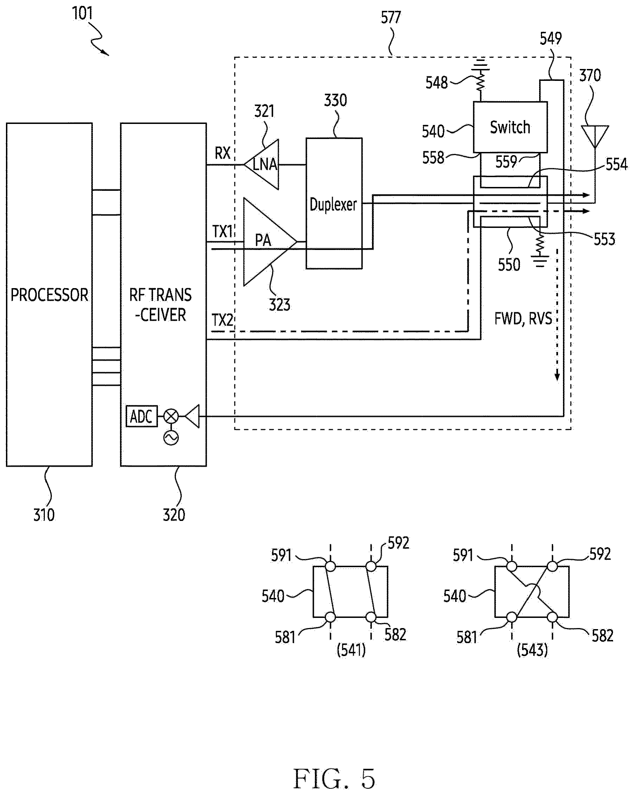

Hereinafter, in illustrating the RF path in FIGS. 5 to 8B, an RF transmission/reception path including the duplexer 330 is exemplified, but embodiments are not limited thereto. According to an embodiment, in the electronic device illustrated in FIGS. 5 to 8B, the RFFE 477 in which the duplexer 330 is replaced with the switch 370 may be implemented.

FIG. 5 illustrates an example of an electronic device including a dual directional coupler using a switching circuit, according to embodiments. The electronic device (e.g., an electronic device 101 of FIG. 1) according to embodiments may transmit a measurement signal at a lower frequency than a frequency band of a signal (hereinafter, a communication signal) to be transmitted to another electronic device. The measurement signal means a signal used to obtain an S-parameter according to embodiments. The S-parameter, of a change of the S-parameter, may be used to detect the presence of an object, as discussed above. According to an embodiment, an RFFE of the electronic device 101 may include the dual directional coupler for coupling a path for the communication signal and a path for the measurement signal. According to an embodiment, the RFFE of the electronic device 101 may include the switching circuit for selectively outputting a forward coupling signal (FWD) and a reverse coupling signal (RVS).

Referring to FIG. 5, the electronic device 101 may include a processor 310, an RF transceiver 320, an RFFE 577, and an antenna 370. A description of the processor 310, the RF transceiver 320, and the antenna 370 illustrated in FIG. 5 may be referred to FIG. 3. Unlike FIG. 3, the RFFE 577 of the electronic device of FIG. 5 may include a switching circuit 540 and a dual directional coupler 550 instead of a single directional coupler 340, a dual directional coupler 350, and a switch 360.

The RFFE 577 of the electronic device 101 may transmit a transmission signal from the RF transceiver 320 to the antenna 370 or may transmit a reception signal from the antenna 370 to the RF transceiver 320. According to an embodiment, the RFFE 577 of the electronic device 101 may include a low noise amplifier (LNA) 321, a duplexer 330, and/or the dual directional coupler 550, for a reception path. The signal received through the antenna 370 may be transmitted to the RF transceiver 320 through the reception path. According to an embodiment, the RFFE 577 of the electronic device 101 may include a power amplifier (PA) 323, the duplexer 330, and/or the dual directional coupler 550, for a transmission path. An RF signal generated by the RF transceiver 320 may be radiated through the transmission path and the antenna 370. According to embodiments, a first signal and a second signal may be radiated through the antenna 370.

According to an embodiment, the RFFE 577 of the electronic device 101 may include the switching circuit 540 and the dual directional coupler 550, for a coupling path. The coupling path may mean a path through which a signal fed back from the antenna 370, for example, a signal coupled by the dual directional coupler 550 is transmitted to the RF transceiver 320. The dual directional coupler 550 may output the forward coupling signal (FWD) or the reverse coupling signal (RVS). The switching circuit 540 may be configured to control an output of the dual directional coupler 550. The switching circuit 540 may change the direction of the output port of the dual directional coupler 550. Under the control of the switching circuit 540, selectively the forward coupling signal (FWD) may be provided to the RF transceiver 320 or the reverse coupling signal (RVS) may be provided to the RF transceiver 320.

The dual directional coupler 550 according to embodiments may include two coupling lines in addition to an RF path for outputting an input signal. The input signal may include the first signal corresponding to the communication signal. The two coupling lines may include a first coupling line 553 and a second coupling line 554. The first coupling line 553 may be used for an input of the second signal corresponding to the measurement signal. The second coupling line 554 may be used for the output of the dual directional coupler 550. The output of the dual directional coupler 550 may selectively include the forward coupling signal (FWD) or the reverse coupling signal (RVS) according to the direction of the current in the second coupling line 554 under the control of the switching circuit 540. The forward coupling signal included in the output of the dual directional coupler 550 may include the forward coupling signal of the first signal and the forward coupling signal of the second signal. The reverse coupling signal included in the output of the dual directional coupler 550 may include the reverse coupling signal of the first signal and the reverse coupling signal of the second signal.

According to an embodiment, in a first state 541 of the switching circuit 540, a first termination 558 of the second coupling line 554 may be connected to a termination impedance 548 of the second coupling line 554, and a second termination 559 of the second coupling line 554 may be connected to an output path 549 of the dual directional coupler 550. In a second state 543 of the switching circuit 540, the first termination 558 of the second coupling line 554 may be connected to the output path 549, and the second termination 559 of the second coupling line 554 may be connected to the termination impedance 548. According to an embodiment, the switching circuit 540 may include a double pole double throw (DPDT) switch. A first pole 581 of the DPDT switch may correspond to the first termination 558 of the second coupling line 554 of the dual directional coupler 550. A second pole 582 of the DPDT switch may correspond to the second termination 559 of the second coupling line 554 of the dual directional coupler 550. Throws 591 and 592 for the first pole 581 of the DPDT switch may include the termination impedance 548 and the output path 549. The first pole 581 may be connected to the first throw 591 or the second throw 592. The throws 591 and 592 for the second pole of the DPDT switch may include the termination impedance 548 and the output path 549. The second pole 582 may be connected to the first throw 591 or the second throw 592. The first throw 591 of the DPDT switch may correspond to the termination impedance 548. The second throw 592 of the DPDT switch may correspond to the output path 549.

According to an embodiment, the RFFE 577 of the electronic device 101 may include the switching circuit 540 and the dual directional coupler 550 for the forward coupling signal and the reverse coupling signal. The RFFE structure may be simplified through the switching circuit 540 instead of the single directional coupler 340 of FIG. 3. By electrically connecting the first coupling line 553 of the dual directional coupler 550 to the RF transceiver 320, the measurement signal may be provided to the antenna 370. The dual directional coupler 550 may output the forward coupling signal or the reverse coupling signal under the control of the switching circuit 540.

According to embodiments, the processor 310 may control the RF transceiver 320 to obtain the forward coupling signal of the second signal and the reverse coupling signal of the second signal. As described in FIG. 3, the forward coupling signal and the reverse coupling signal may be used to measure the S-parameter (e.g., $S_{11}$, $S_{21}$) of the antenna 370. The processor 310 may measure a reflection coefficient based on the forward coupling signal of the second signal and the reverse coupling signal of the second signal. The processor 310 may identify a change in the reflection coefficient. The processor 310 may detect the object based on the change in the reflection coefficient (for example, may detect that an external object is within a predetermined distance from a device including the processor 310). According to an embodiment, the processor 310 may detect a grip of the object. The processor 310 may perform a designated function in response to the detection. According to an embodiment, the processor 310 may lower the transmission power of the communication signal so that a condition for the SAR is satisfied in the grip state. It should be understood that the processor 310 may later increase the transmission power of the communication signal if it is detected that the object is removed.

In FIG. 5, the switching circuit 540 and the dual directional coupler 550 are illustrated separately. The switching circuit 540 and the dual directional coupler 550 may be implemented as a separate component respectively, but embodiments of the present disclosure are not limited thereto. For example, the electronic device 101 may include one module including the switching circuit 540 and the dual directional coupler 550.

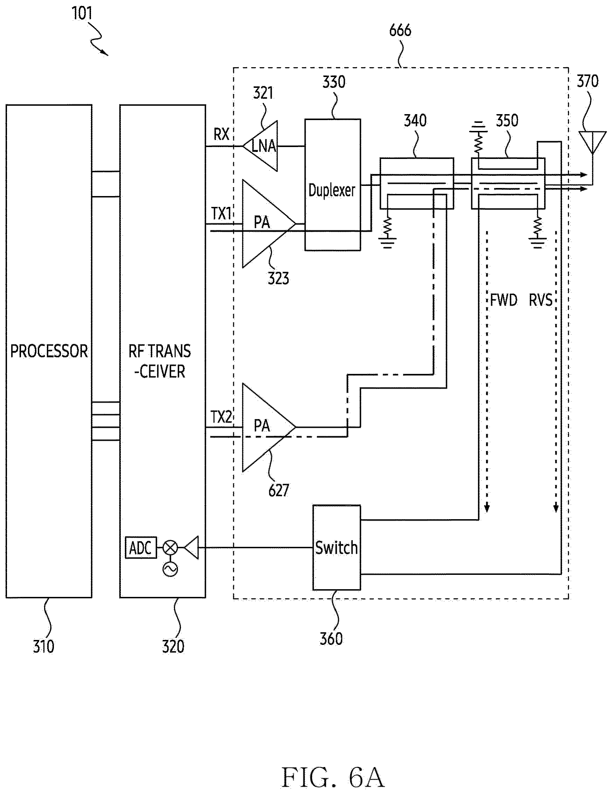

FIG. 6A illustrates an example of an electronic device including an amplifying circuit and a coupler for a measurement signal, according to embodiments. Unlike FIG. 3, instead of using an output of an RF transceiver as it is, the measurement signal transmitted to measure an S-parameter may use a separate power amplifier for the measurement signal.

Referring to FIG. 6A, according to an embodiment, the electronic device (e.g., an electronic device 101 of FIG. 1) may include a processor 310, an RF transceiver 320, an RFFE 666 including the amplifying circuit for the measurement signal, and an antenna 370. A description of the processor 310, the RF transceiver 320, and the antenna 370 illustrated in FIG. 6A may be referred to FIG. 3.

The RFFE 666 of the electronic device 101 of FIG. 6A may further include a PA 627 compared to an RFFE 377 of FIG. 3. In the RFFE 666 of the electronic device 101 of FIG. 6A, the description of the PA 627 and other components (e.g., LNA 321, PA 323, duplexer 330, single directional coupler 340, dual directional coupler 350, or switch 360) may be referred to FIG. 3. The RF transceiver 320 may output a second signal, which is the measurement signal, in a frequency band lower than a frequency band of a first signal, which is a communication signal. In an embodiment, the amplifying circuit for the measurement signal may include the PA 627. According to an embodiment, the second signal of the RF transceiver 320 may be amplified by the PA 627. The amplified second signal may be inputted to a coupling port of the single directional coupler 340. The second signal may be inputted to the dual directional coupler 350 through the coupling port of the single directional coupler 340. Since the signal inputted to the dual directional coupler 350 is an amplified signal, an output power (e.g., about 0 dBm) of the dual directional coupler 350 for the second signal may be higher than an output power (e.g., about -50 dBm) of the dual directional coupler 350 of FIG. 3 for the second signal.

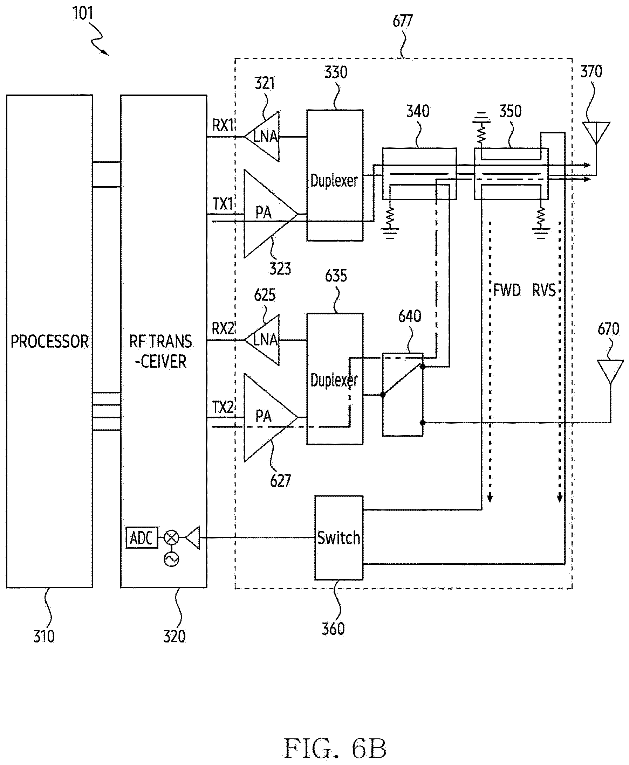

FIG. 6B illustrates an example of an electronic device including a coupler and a switch for providing a measurement signal using at least a part of a configuration for transmitting and/or receiving a communication signal, according to embodiments. In FIG. 6B, a communication frequency band of the communication signal may be, for example, a frequency band of a low-band (e.g., less than 1 GHz). The electronic device may transmit a signal to another electronic device (e.g., base station) on a second frequency band.

Referring to FIG. 6B, in an embodiment, the electronic device (e.g., an electronic device 101 of FIG. 1) may include a processor 310, an RF transceiver 320, an RFFE 677 including a communication path, and an antenna 370. A description of the processor 310, the RF transceiver 320, and the antenna 370 illustrated in FIG. 6B may be referred to FIG. 3.

The RFFE 677 of the electronic device 101 of FIG. 6B may include an LNA 625, a PA 627, a duplexer 635, a switch 640, and an antenna 670 compared to an RFFE 377 of FIG. 3. For example, the electronic device 101 of FIG. 6B may include the switch 640 and the antenna 670 compared to an RFFE 666 of FIG. 6A. In an embodiment, through the antenna 670, the electronic device 101 may transmit and/or receive a signal in the communication frequency band (hereinafter, a second communication frequency band) lower than the communication frequency band (hereinafter, a first communication frequency band) where a first signal is transmitted through the antenna 670. The RFFE 677 of the electronic device 101 may include an RF path for radiating or receiving a signal of the second communication frequency band. The RFFE 677 of the electronic device 101 may transmit a transmission signal from the RF transceiver 320 to the antenna 670 or may transmit a reception signal from the antenna 670 to the RF transceiver 320. The RFFE 677 of the electronic device 101 may include the LNA 625, the duplexer 635, a single directional coupler 340, and a dual directional coupler 350, for a reception path. The single directional coupler 340 may be the single directional coupler of Figure 2A, and the dual directional coupler 350 may be the dual directional coupler of Figure 2B. The signal received through the antenna 670 may be transmitted to the RF transceiver 320 through the reception path. The RFFE 677 of the electronic device 101 may include the PA 627, the duplexer 635, the single directional coupler 340, and the dual directional coupler 350, for a transmission path. The RF signal generated by the RF transceiver 320 may be radiated on a radio channel through the transmission path and the antenna 670.

According to an embodiment, the RFFE 677 of the electronic device 101 may include the switch 640. The switch 640 may electrically connect the single directional coupler 340 or the antenna 670 to the duplexer 635. For example, under the control of the switch 640, the duplexer 635 may be electrically connected to the single directional coupler 340. For example, under the control of the switch 640, the duplexer 635 may be electrically connected to the antenna 670. For example, the switch 640 may include a single pole single through (SPDT) switch. Here, the switch 640 is for setting a path between the antenna 670 and the single directional coupler 340, and is different from an antenna switch module for selecting filters within a single antenna. According to an embodiment, in case that communication is not performed in the second communication frequency band, by controlling the switch 640, the processor 310 may electrically connect an RF signal path (e.g., the LNA 625, the PA 627, or the duplexer 635) for the second communication frequency band to the single directional coupler 340 for the antenna 370. In case that the communication is performed in the second communication frequency band, by controlling the switch 640, the processor 310 may electrically connect the RF signal path (e.g., the LNA 625, the PA 627, or the duplexer 635) for the second communication frequency band to the antenna 670.

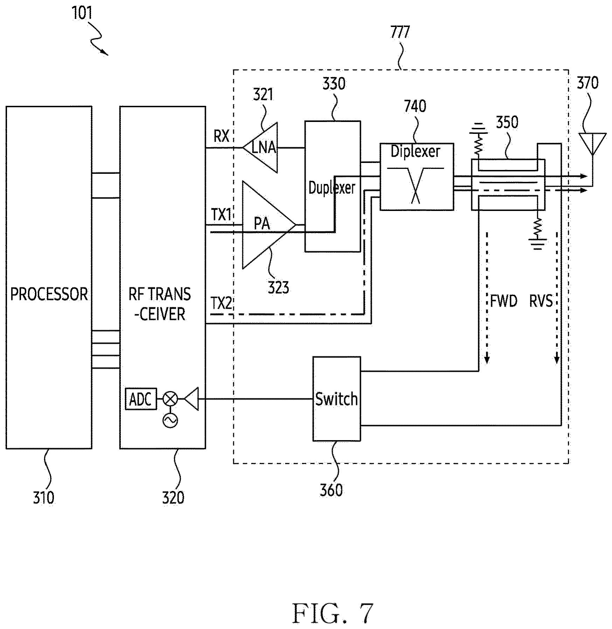

FIG. 7 illustrates an example of an electronic device including a diplexer for a measurement signal, according to embodiments. An RFFE 377 of the electronic device (e.g., an electronic device 101 of FIG. 1) illustrated in FIG. 3 may include a single directional coupler 340. However, the single directional coupler 340 is only an example for coupling a path of the measurement signal and a path of a communication signal in an RF path in the RFFE 377, and embodiments of the present disclosure are not limited thereto. The single directional coupler 340 may be the single directional coupler of Figure 2A.

Referring to FIG. 7, the electronic device 101 may include a processor 310, an RF transceiver 320, an RFFE 777 including a diplexer 740, and/or an antenna 370. A description of the processor 310, the RF transceiver 320, and the antenna 370 illustrated in FIG. 7 may be referred to FIG. 3.

Unlike FIG. 3, an RFFE of the electronic device 101 of FIG. 7 may include the diplexer 740 instead of the single directional coupler 340. In the RFFE 777 of the electronic device 101 of FIG. 7, a description of other components (e.g., LNA 321, PA 323, duplexer 330, dual directional coupler 350, and switch 360) other than the diplexer 740 may be referred to FIG. 3. The electronic device 101 may transmit a first signal to another electronic device. The first signal may be the communication signal. The electronic device 101 may transmit a second signal to measure a reflection coefficient. The second signal is the measurement signal, and may be used to detect an object. In order to easily measure a change in the reflection coefficient, a frequency of the second signal may be set to be lower than a communication frequency of the first signal. The diplexer 740 may include a high pass filter (HPF) and a low pass filter (LPF). The HPF passes a frequency above the designated lower limit frequency. The LPF passes a frequency below the designated upper limit frequency. According to an embodiment, the HPF of the diplexer 740 may be configured to pass the frequency of the first signal. According to an embodiment, the frequency band to which the first signal is transmitted may be a mid-band (e.g., a frequency band having a range of 1 GHz or more and less than about 2.3 GHz) or a high-band (e.g., a frequency band having a range of 2.3 GHz or more). According to an embodiment, the diplexer 740 may be configured to pass the frequency of the second signal. According to an embodiment, the frequency range in which the frequency of the second signal is transmitted may be a low-band (e.g., a frequency band having a range of less than 1 GHz).

FIG. 8A illustrates an example of an electronic device including an amplifying circuit and a diplexer for a measurement signal, according to embodiments. Unlike FIG. 7, instead of using the output of the RF transceiver as it is, the measurement signal transmitted for measurement of an S-parameter may use a separate power amplifier for the measurement signal.

Referring to FIG. 8A, according to an embodiment, the electronic device (e.g., an electronic device 101 of FIG. 1) may include a processor 310, an RF transceiver 320, an RFFE 866 including the amplifying circuit for the measurement signal, and an antenna 370. A description of the processor 310, the RF transceiver 320, and the antenna 370 illustrated in FIG. 8A may be referred to FIG. 3.

The RFFE 866 of the electronic device 101 of FIG. 8A may further include a PA 827 compared to an RFFE 777 of FIG. 7. In the RFFE 866 of the electronic device 101 of FIG. 8A, a description of the PA 827 and other components (e.g., LNA 321, PA 323, duplexer 330, diplexer 740, dual directional coupler 350, and switch 360) may be referred to FIGS. 3 and 7. The RF transceiver 320 may output a second signal, which is the measurement signal and which may be used to detect an object, in a frequency band lower than a frequency band of a first signal, which is a communication signal. The amplifying circuit for the measurement signal may include the PA 827. According to an embodiment, the second signal of the RF transceiver 320 may be amplified by the PA 827. The amplified second signal may be inputted to the diplexer 740. The second signal may be inputted to the dual directional coupler 350 through the diplexer 740. Since the signal inputted to the dual directional coupler 350 is an amplified signal, an output power of the dual directional coupler 350 for the second signal may be higher than an output power of the dual directional coupler 350 of FIG. 7 for the second signal.

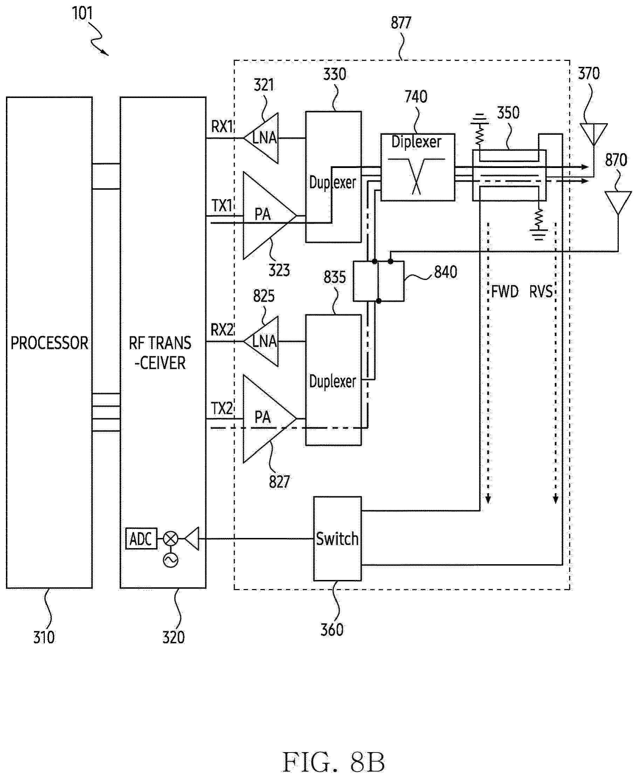

FIG. 8B illustrates an example of an electronic device including a diplexer and a switch for providing a measurement signal by using at least a part of a configuration for transmitting and/or receiving a communication signal, according to embodiments. In FIG. 8B, a communication frequency band of the communication signal may be, for example, a frequency band of a low-band (e.g., less than 1 GHz). The electronic device may transmit a signal to another electronic device (e.g., base station) on a second frequency band.

Referring to FIG. 8B, in an embodiment, the electronic device (e.g., an electronic device 101 of FIG. 1) may include a processor 310, an RF transceiver 320, an RFFE 877 including a communication path, and an antenna 370. A description of the processor 310, the RF transceiver 320, and the antenna 370 illustrated in FIG. 8B may be referred to FIG. 3.

The RFFE 877 of the electronic device 101 of FIG. 8B may include an LNA 825, a PA 827, a duplexer 835, a switch 840, and an antenna 870 compared to an RFFE 377 of FIG. 3. In other words, the electronic device 101 of FIG. 8B may include the switch 840 and the antenna 870 compared to an RFFE 866 of FIG. 8A. In an embodiment, through the antenna 870, the electronic device 101 may transmit and/or receive a signal in the communication frequency band (hereinafter, a second communication frequency band) lower than the communication frequency band (hereinafter, a first communication frequency band) in which a first signal is transmitted through the antenna 870. The RFFE 877 of the electronic device 101 may include an RF path for radiating or receiving a signal of the second communication frequency band. The RFFE 877 of the electronic device 101 may transmit a transmission signal from the RF transceiver 320 to the antenna 870 or may transmit a reception signal from the antenna 870 to the RF transceiver 320. The RFFE 877 of the electronic device 101 may include the LNA 825, the duplexer 835, a diplexer 740, and a dual directional coupler 350, for a reception path. A signal received through the antenna 870 may be transmitted to the RF transceiver 320 through the reception path. The RFFE 877 of the electronic device 101 may include the PA 827, the duplexer 835, the diplexer 740, and the dual directional coupler 350, for a transmission path. An RF signal generated by the RF transceiver 320 may be radiated on a radio channel through the transmission path and the antenna 870.

According to an embodiment, the RFFE 877 of the electronic device 101 may include the switch 840. The switch 840 may electrically connect the diplexer 740 or the antenna 370 to the duplexer 835. For example, under the control of the switch 840, the duplexer 835 may be electrically connected to the diplexer 740. For example, under the control of the switch 840, a duplexer 835 may be electrically connected to the antenna 870. For example, the switch 840 may include a single pole single through (SPDT) switch. Here, the switch 840 is for setting a path between the antenna 870 and the diplexer 740, and is different from an antenna switch module for selecting filters within a single antenna. According to an embodiment, in case that communication is not performed in the second communication frequency band, by controlling the switch 840, the processor 310 may electrically connect an RF signal path (e.g., LNA 825, PA 827, or duplexer 835) for the second communication frequency band to the diplexer 740 for the antenna 370. In case that communication is performed in the second communication frequency band, by controlling the switch 840, the processor 310 may electrically connect the RF signal path (e.g., the LNA 825, the PA 827, or the duplexer 835) for the second communication frequency band to a path of the antenna 870.

It should be understood that in the examples of Figures 3 to 8B, the single directional coupler may be the single directional coupler of Figure 2A, and the dual directional coupler may be the dual directional coupler of Figure 2B. Alternatively, as explained below, alternative implementations of couplers may be used in place of those shown in Figures 3 to 8B.

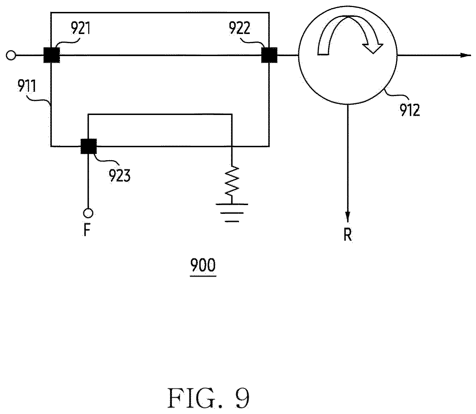

FIG. 9 illustrates another example of a dual directional coupler according to embodiments. The dual directional coupler is a dual directional coupler and may provide a forward coupling signal and a reverse coupling signal to an RF transceiver. In order to provide the forward coupling signal and the reverse coupling signal, the dual directional coupler is not limited to an implementation method illustrated in FIG. 2B, and may be implemented in various methods. As an example of the implementation method, a dual directional coupler circuit of FIG. 9 is illustrated.

Referring to FIG. 9, according to an embodiment, a dual directional coupler circuit 900 may include a single directional coupler 911 and a circulator 912. An RF signal inputted to a first port 921 of the single directional coupler 911 may pass through an RF line and may be outputted from a second port 922 of the single directional coupler 911. The output RF signal may be inputted to the circulator 912. A third port 923 of the single directional coupler 911 may output the forward coupling signal for the RF signal. The circulator 912 may output the RF signal in response to an input of the RF signal. The circulator 912 may output the reverse coupling signal for the RF signal in response to the input of the RF signal. For example, as illustrated in FIG. 9, by coupling not only one RF component, but also a number of RF components, a circuit providing the forward coupling signal and the reverse coupling signal may also be understood as the dual directional coupler according to embodiments of the present disclosure.

The dual directional coupler circuit 900 may be disposed to be connected to the antenna 370 instead of a dual directional coupler 350 in an RFFE 377 of FIG. 3, an RFFE 477 of FIG. 4, an RFFE 666 of FIG. 6A, an RFFE 677 of FIG. 6B, an RFFE 777 of FIG. 7, an RFFE 866 of FIG. 8A, and an RFFE 877 of FIG. 8B. According to an embodiment, the dual directional coupler circuit 900 may be disposed to be connected to a switching circuit 540 and the antenna 370 instead of a dual directional coupler 550.

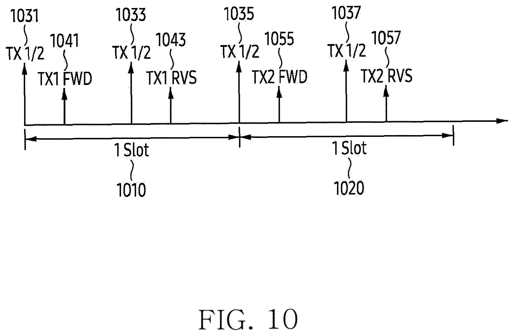

FIG. 10 illustrates an example of extracting signal components for object detection, according to embodiments. An electronic device (e.g., an electronic device 101 of FIG. 1) according to embodiments may transmit a second signal at a lower frequency than a frequency band of a first signal transmitted to another electronic device. For example, the second signal may mean a signal used for the object detection (e.g., grip detection). Detecting an object may be understood as detecting that an external object is within a predetermined distance from the electronic device.

Referring to FIG. 10, the electronic device 101 may transmit a first signal (e.g., a communication signal transmitted to another electronic device) TX1 and a second signal (e.g., a measurement signal used to obtain an S-parameter) TX2. TX1 and TX2 may be transmitted through the pathways shown in FIGS. 3 to 8B. For example, the electronic device 101 may periodically transmit the first signal TX1 and the second signal TX2. In a first slot 1010, the electronic device 101 may transmit the first signal TX1 and the second signal TX2. A slot represents a time unit. For example, in a LTE frequency band, the slot may be 500 $\mu$s. At a first time point 1031 within the first slot 1010, the electronic device 101 may transmit the first signal TX1 and the second signal TX2. At a second time point 1033 within the first slot 1010, the electronic device 101 may transmit the first signal TX1 and the second signal TX2. At a third time point 1035 within a second slot 1020, the electronic device 101 may transmit the first signal TX1 and the second signal TX2. At a fourth time point 1037 within the second slot 1020, the electronic device 101 may transmit the first signal TX1 and the second signal TX2. It should also be understood that the first signal TX1 and the second signal TX2 may be transmitted simultaneously, or alternately during the same or consecutive time slots.

According to an embodiment, the electronic device 101 may obtain a forward coupling signal 1041 of the first signal TX1 within the first slot 1010. The electronic device 101 may obtain a forward coupling signal and a reverse coupling signal by varying time among coupling signals obtained from a dual directional coupler (e.g., a dual directional coupler 350, a dual directional coupler 550, and a dual directional coupler circuit 900). For example, after receiving the forward coupling signal, the electronic device 101 may obtain the forward coupling signal 1041 of the first signal TX1 from the forward coupling signal. The electronic device 101 may obtain a reverse coupling signal 1043 of the first signal TX1 within the first slot 1010. After receiving the reverse coupling signal, the electronic device 101 may obtain the reverse coupling signal 1043 of the first signal TX1 from the reverse coupling signal.

According to an embodiment, the electronic device 101 may obtain a forward coupling signal 1055 of the second signal TX2 within the second slot 1020. The electronic device 101 may obtain the forward coupling signal and the reverse coupling signal by varying time among coupling signals obtained from the dual directional coupler (e.g., the dual directional coupler 350, the dual directional coupler 550, and the dual directional coupler 900). For example, after receiving the forward coupling signal, the electronic device 101 may obtain the forward coupling signal 1055 of the second signal TX2 from the forward coupling signal. According to an embodiment, the electronic device 101 may obtain the forward coupling signal 1055 of the second signal TX2 from the forward coupling signal based on a LNA, a mixer, and an oscillator of a RF transceiver. The electronic device 101 may identify the forward coupling signal 1055 of the second signal TX2 from the forward coupling signal based on the transmission frequency of the second signal TX2. The electronic device 101 may obtain a reverse coupling signal 1057 of the second signal TX2 within the second slot 1020. After receiving the reverse coupling signal, the electronic device 101 may obtain the reverse coupling signal 1057 of the second signal TX2 from the reverse coupling signal. According to an embodiment, the electronic device 101 may obtain the reverse coupling signal 1057 of the second signal TX2 from the reverse coupling signal based on the LNA, the mixer, and the oscillator of the RF transceiver. The electronic device 101 may identify the reverse coupling signal 1057 of the second signal TX2 from the forward coupling signal based on the transmission frequency of the second signal TX2. The electronic device 101 may identify the forward coupling signal and the reverse coupling signal as explained in FIGS. 3 to 8B.

In FIG. 10, although an example of periodically extracting a forward coupling signal TX1 FWD and a reverse coupling signal TX1 RVS for the first signal TX1 and a forward coupling signal TX2 FWD and a reverse coupling signal TX2 RVS for the second signal TX2 is illustrated with a period of one slot, embodiments of the present disclosure are not limited thereto. As for the period, another parameter (e.g., a subframe, a plurality of slots) other than one slot may be used. In addition, according to an embodiment, the period for extracting the forward coupling signal TX2 FWD of the second signal and the reverse coupling signal TX2 RVS of the second signal may be set independently of the period for extracting the forward coupling signal TX1 FWD of the first signal and the reverse coupling signal TX1 RVS of the first signal. For example, the period for extracting the forward coupling signal TX2 FWD of the second signal and the reverse coupling signal TX2 RVS of the second signal may be set shorter than the period for extracting the forward coupling signal TX1 FWD of the first signal and the reverse coupling signal TX1 RVS of the first signal.

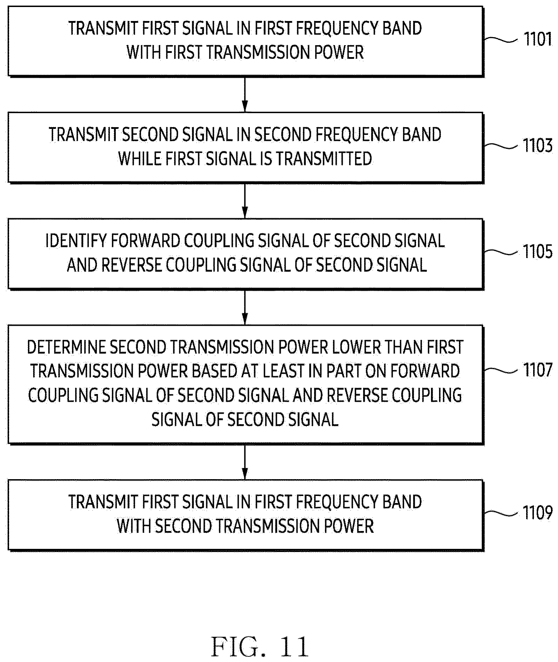

FIG. 11 illustrates an operation flow of an electronic device (e.g., an electronic device 101 of FIG. 1) for detecting an object according to embodiments. A measurement signal means a signal used to detect the object. The electronic device 101 according to embodiments may transmit the measurement signal at a lower frequency than a frequency band of a communication signal transmitted to another electronic device. Operations of the electronic device 101 may be performed by a processor (e.g., a processor 310). Hereinafter, the measurement signal is referred to as a second signal, and the communication signal is referred to as a first signal. The electronic device for performing the method of FIG. 11 may include one or more of the devices or components illustrated in FIGS 1 to 9.

Referring to FIG. 11, in operation 1101, the electronic device 101 may transmit the first signal in a first frequency band with a first transmission power. The electronic device 101 may transmit the first signal through an antenna (e.g., the antenna 370). The first signal may be transmitted to another electronic device. According to an embodiment, the first frequency band may be a mid-band or a high-band.

In operation 1103, the electronic device 101 may transmit the second signal in a second frequency band while the first signal is transmitted. The electronic device 101 may transmit the second signal through the antenna 370. The second signal may be transmitted to measure an S-parameter (e.g., reflection coefficient) for the antenna 370. According to an embodiment, the second frequency band may be a low-band. The second signal may be a measurement signal used to detect an object. For example, the second signal may be a signal used to identify that an external object is within a predetermined distance from the electronic device.

In operation 1105, the electronic device 101 may identify a forward coupling signal of the second signal and a reverse coupling signal of the second signal. The electronic device 101 may identify the forward coupling signal of the second signal. The electronic device 101 may obtain the forward coupling signal from a dual directional coupler (e.g., a dual directional coupler 350, and a dual directional coupler circuit 900) electrically connected to the antenna. The dual directional coupler 350 may output the forward coupling signal in response to an input of the first signal and/or an input of the second signal. The electronic device 101 may identify the forward coupling signal of the second signal from the forward coupling signal. The electronic device 101 may identify the reverse coupling signal of the second signal. The electronic device 101 may obtain the reverse coupling signal from the dual directional coupler 350 coupled to the antenna 370. The dual directional coupler 350 may output the reverse coupling signal in response to the input of the first signal and the input of the second signal. The electronic device 101 may identify the reverse coupling signal of the second signal from the reverse coupling signal. The electronic device 101 may detect an object based at least in part on the forward coupling signal of the second signal and the reverse coupling signal of the second signal. For example, the electronic device 101 may identify that an external object is within a predetermined distance from the electronic device 101 based at least in part on the forward coupling signal of the second signal and the reverse coupling signal of the second signal.

In operation 1107, the electronic device 101 may determine a second transmission power lower than the first transmission power based on at least a part of the forward coupling signal of the second signal and the reverse coupling signal of the second signal. The electronic device 101 may obtain the amount of change in the reflection coefficient based on at least a part of the forward coupling signal of the second signal and the reverse coupling signal of the second signal. The electronic device 101 may detect the object based on obtaining the amount of the change in the reflection coefficient greater than or equal to a threshold value. According to an embodiment, a detecting target may include a grip of the object. The object detected based on the change in the reflection coefficient may be a part of the body (e.g., hand). According to an embodiment, the electronic device 101 may lower a transmission power in order to satisfy a condition for a specific absorption rate (SAR), for example, a condition for limiting power so as not to be harmful to the human body. The electronic device 101 may determine the second transmission power lower than the first transmission power of the current first signal.

In operation 1109, the electronic device 101 may transmit the first signal in the first frequency band with the second transmission power. The electronic device 101 may change the transmission power of the first signal transmitted on the first frequency band from the first transmission power to the second transmission power. The electronic device 101 may control a power amplifier of the first signal so that the first signal radiates a signal with the second transmission power. It should be understood that operations 1107 and 1109 may be optional, or may be based on a determination that the forward and reverse coupling signals identified in step 1105 indicate the presence of an object or are equal to predetermined values, or based on a parameter derivable from the forward and reverse coupling signals being equal to a predetermined value.

It should be understood that the method of Figure 11 may further comprise monitoring the forward and reverse coupling signals for a condition which indicates a removal of the object, and changing the transmission power of the first signal to increase in response to determining that the object is no longer present.

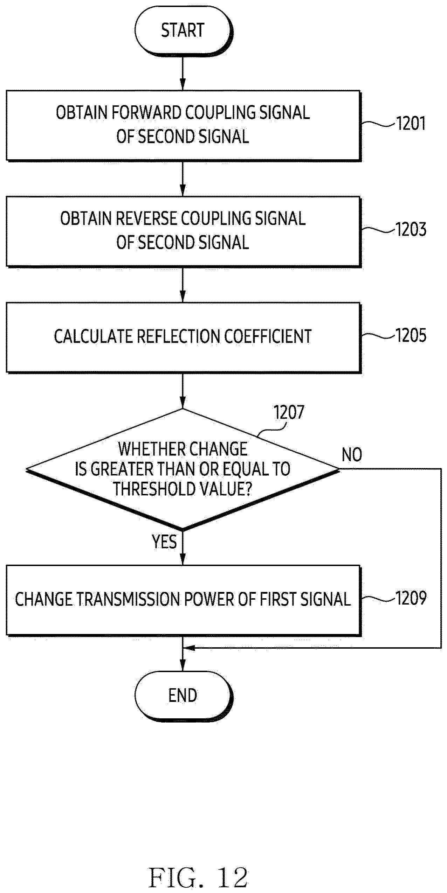

FIG. 12 illustrates an operation flow of an electronic device for changing transmission power according to embodiments. For example, a measurement signal may mean a signal used to detect an object. The electronic device (e.g., an electronic device 101 of FIG. 1) according to embodiments may transmit the measurement signal at a lower frequency than a frequency band of a communication signal transmitted to another electronic device. Operations of the electronic device 101 may be performed by a processor (e.g., a processor 310). Hereinafter, the measurement signal is referred to as a second signal, and the communication signal is referred to as a first signal. The electronic device for performing the method of FIG. 12 may include one or more of the devices or components illustrated in FIGS 1 to 9.

Referring to FIG. 12, in operation 1201, the electronic device 101 may obtain a forward coupling signal of the second signal. The electronic device 101 may obtain signals from a coupler. The electronic device 101 may obtain the forward coupling signal of the second signal among signals obtained from the coupler. The second signal may be transmitted at a lower frequency than a frequency band of the first signal which is in communication. The electronic device 101 may control an RF transceiver (e.g., an RF transceiver 320) to obtain the forward coupling signal of the second signal based on a frequency of the second signal.

In operation 1203, the electronic device 101 may obtain a reverse coupling signal of the second signal. The electronic device 101 may obtain signals from the coupler. The electronic device 101 may obtain the reverse coupling signal of the second signal among signals obtained from the coupler. The second signal may be transmitted at the lower frequency than the frequency band of the first signal which is in communication. The electronic device 101 may control the RF transceiver (e.g., the RF transceiver 320) to obtain the reverse coupling signal of the second signal based on the frequency of the second signal.

In operation 1205, the electronic device 101 may calculate a reflection coefficient. The electronic device 101 may calculate the reflection coefficient based on the forward coupling signal and the reverse coupling signal. The electronic device 101 may calculate the reflection coefficient based on the forward coupling signal of the second signal and the reverse coupling signal of the second signal. For example, the electronic device 101 may calculate the reflection coefficient based on Equation 1.

In operation 1207, the electronic device 101 may identify whether the amount of change in the reflection coefficient is greater than or equal to a threshold value. The electronic device 101 may obtain the amount of change in the reflection coefficient. For example, the threshold value may be a value set to correspond to a detection of the object. According to an embodiment, in case that the amount of change in the reflection coefficient is greater than or equal to the threshold value, the electronic device 101 may determine that the object is detected. For example, in case that the amount of change in the reflection coefficient is greater than or equal to the threshold value, the electronic device 101 may detect a grip of the object, although it should be understood that objects other than a user's hand may be detected. The electronic device 101 may perform operation 1209. In case that the amount of change in the reflection coefficient is less than the threshold value, electronic device 101 may determine that the object is not detected. The electronic device 101 may terminate the object detection operation.

In operation 1209, the electronic device 101 may change the transmission power of the first signal. The electronic device 101 may radiate the first signal. An electromagnetic wave signal of the first signal may be harmful to the human body. In order to supplement this point, the electronic device 101 may check a specific absorption rate (SAR), which is a rate at which the electromagnetic wave signal radiated from the electronic device 101 is absorbed by biological tissue. According to an embodiment, the electronic device 101 may lower the transmission power to satisfy a condition for the SAR, for example, a degree that is not harmful to the human body. For example, if the reflection coefficient changes above the threshold value, the electronic device 101 may detect the object (e.g., head or hand). The electronic device 101 may lower the transmission power of the first signal so that the condition for the SAR is satisfied. It should be understood that the method of Figure 12 may further comprise monitoring for a change in the reflection coefficient that indicates a removal of the object, and changing the transmission power of the first signal to increase in response to determining that the object is no longer present.

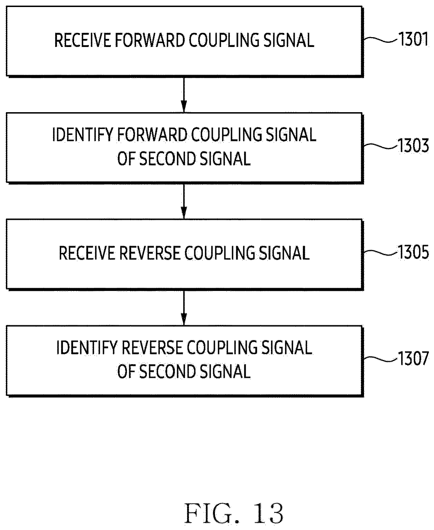

FIG. 13 illustrates an operation flow of an electronic device for extracting signal components for object detection, according to embodiments. For example, a measurement signal may mean a signal used to detect an object. The electronic device (e.g., an electronic device 101 of FIG. 1) according to embodiments may transmit the measurement signal at a lower frequency than a frequency band of a communication signal transmitted to another electronic device. Operations of the electronic device 101 may be performed by a processor (e.g., a processor 310). Hereinafter, the measurement signal is referred to as a second signal, and the communication signal is referred to as a first signal. The electronic device for performing the method of FIG. 13 may include one or more of the devices or components illustrated in FIGS 1 to 9.

Referring to FIG. 13, in operation 1301, the electronic device 101 may receive a forward coupling signal. The electronic device may receive the forward coupling signal from a dual directional coupler (e.g., a dual directional coupler 350, and a dual directional coupler circuit 900). The dual directional coupler 350 may be coupled to an antenna from which the first signal and the second signal are radiated. The dual directional coupler 350 may output the forward coupling signal for the inputs together based on an input of the first signal and an input of the second signal. The forward coupling signal may include a forward coupling signal of the first signal and a forward coupling signal of the second signal. An RF transceiver (e.g., an RF transceiver 320) of the electronic device 101 may receive the forward coupling signal.

In operation 1303, the electronic device 101 may identify the forward coupling signal of the second signal. The electronic device 101 may identify the forward coupling signal of the second signal from the forward coupling signal in operation 1301. The second signal may be transmitted at a lower frequency than a frequency band of the first signal which is in communication. Using the frequency difference, the electronic device 101 may control the RF transceiver 320 of the electronic device 101 to identify the forward coupling signal of the second signal.

In operation 1305, the electronic device 101 may receive the reverse coupling signal. The electronic device 101 may receive the reverse coupling signal from the dual directional coupler 350. The dual directional coupler 350 may be electrically connected to the antenna from which the first signal and the second signal are radiated. The dual directional coupler 350 may output reverse coupling signals for the inputs together based on the input of the first signal and the input of the second signal. The reverse coupling signal may include a reverse coupling signal of the first signal and a reverse coupling signal of the second signal. The electronic device 101 may receive the reverse coupling signal through the RF transceiver 320.

In operation 1307, the electronic device 101 may identify the reverse coupling signal of the second signal. The electronic device 101 may identify the reverse coupling signal of the second signal from the reverse coupling signal in operation 1305. The second signal may be transmitted at the lower frequency than the frequency band of the first signal which is in communication. Using the frequency difference, the electronic device 101 may control the RF transceiver 320 of the electronic device 101 to identify the reverse coupling signal of the second signal.

In FIG. 13, operations of the electronic device 101 for obtaining the forward coupling signal of the second signal and then obtaining the reverse coupling signal of the second signal are described, but embodiments of the present disclosure are not limited thereto. According to an embodiment, at least some of the operations of operation 1305 and operation 1307 may be performed in parallel with operation 1301 and operation 1303. For example, the electronic device 101 may obtaining the reverse coupling signal of the first signal after obtaining the reverse coupling signal of the second signal.

It should be understood that the methods of FIGs. 11 to 13 may further comprise a step of detecting that an object is no longer proximal to the device, and controlling the transmission power for the first signal to increase in response to the detection that the object is no longer proximal to the device. For example, the transmission power for the first signal may be returned to the first transmission power.

It should also be understood that in some examples, reference to transmitting the second signal while the first signal is transmitted may mean that the first signal and the second signal are transmitted simultaneously. Transmitting the second signal while the first signal is transmitted should also be understood to mean in another example, the first signal and the second signal may be transmitted alternatively, or selectively under the control of a switch, switching circuit and the like. In an example, the first and second signals may be transmitted from the RF transceiver simultaneously to the dual directional coupler. In another example, the first and second signals may be transmitted from the RF transceiver simultaneously but the second signal may be received selectively, alternately or interspersed with the first signal at the dual directional coupler based on the operation of a switch, switching circuit or the like.

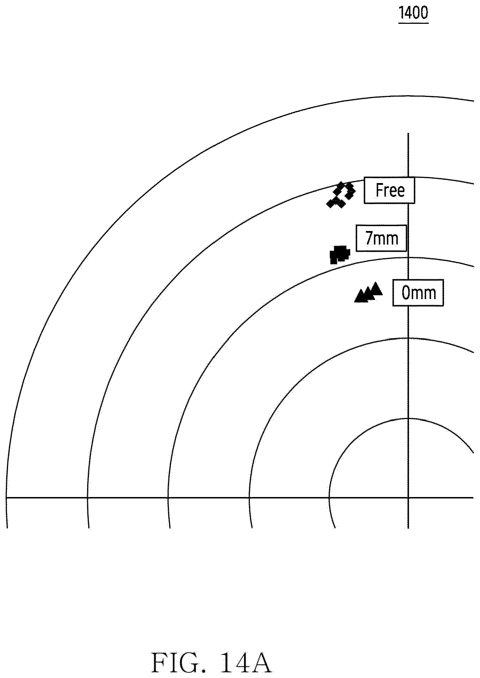

FIG. 14A illustrates an example of object detection in a mid-band according to embodiments. For example, the mid-band may be an N3 (or B3) band. The N3 (or B3) band represents a carrier frequency of 1805 MHz or more and less than 1880 MHz in downlink, and represents a carrier frequency of 1710 MHz or more and less than 1785 MHz in uplink.

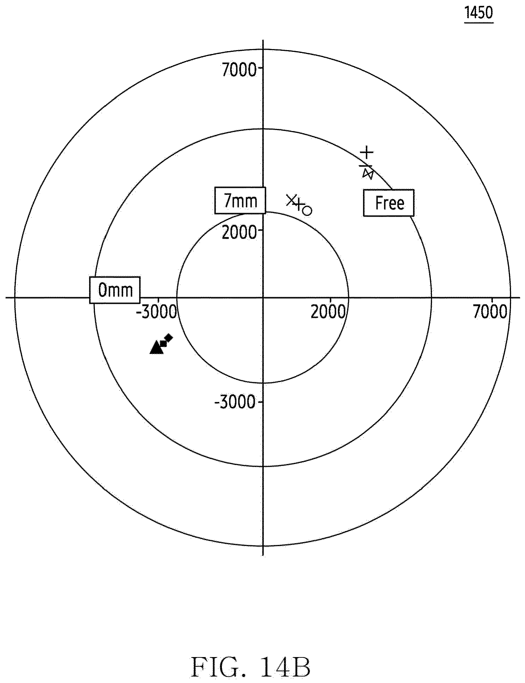

FIG. 14B illustrates an example of object detection in a low-band according to embodiments. For example, the low-band may be an N5 (or B5) band. The N5 (or B5) band represents a carrier frequency of 869 MHz or more and less than 894 MHz in downlink, and represents a carrier frequency of 824 MHz or more and less than 849 MHz in uplink.

Referring to FIG. 14A, a reference data 1400 represents a position estimation result using a signal transmitted in the N3 (or B3) band. The position estimation result for each object corresponding to each identification distance may be derived based on a reflection coefficient of the signal transmitted in the N3 (or B3) band. The identification distance means a distance between an object and an electronic device (e.g., an electronic device 101 of FIG. 1). For example, the identification distance may be about 0 mm (millimeter), about 7 mm (millimeter), or free space (e.g., about 2 cm (centimeter) or more).

Referring to FIG. 14B, a reference data 1450 represents the position estimation result using a signal transmitted in the N5 (or B5) band. The position estimation result for each object corresponding to each identification distance may be derived based on the reflection coefficient of the signal transmitted in the N5 (or B5) band. The identification distance means the distance between the object and the electronic device (e.g., the electronic device 101 of FIG. 1). For example, the identification distance may be about 0 mm, about 7 mm, or the free space (e.g., about 2 cm (centimeter) or more). Comparing the reference data 1400 and the reference data 1450, it is confirmed that the classification of the object for each identification distance in the low-band is more clear. According to an embodiment, by measuring a change in the reflection coefficient through a signal of a relatively low frequency, the electronic device 101 may more accurately determine a position of the object.

In embodiments, an electronic device 101, may comprise a processor 310, a radio frequency (RF) transceiver 320, a power amplifier (PA) 323, a dual directional coupler 350, and an antenna 370 connected to the dual directional coupler 350. The processor is configured to control the RF transceiver 320 to transmit a first signal of a first frequency band thorough the PA, the dual directional coupler 350, and the antenna 370 with a first transmission power. The processor is configured to control the RF transceiver 320 to transmit a second signal of a second frequency band lower than the first frequency band thorough the dual directional coupler 350, and the antenna 370 while the first signal is transmitted. The processor is configured to control the RF transceiver 320 to identify a forward coupling signal of the second signal and a reverse coupling signal of the second signal among signals obtained from the dual directional coupler 350. The processor is configured to control the RF transceiver 320 to transmit the first signal based at least in part on the forward coupling signal of the second signal and the reverse coupling signal of the second signal with a second transmission power being lower than the first transmission power.

According to an embodiment, the signals obtained from the dual directional coupler 350 may comprise a forward coupling signal of the first signal, a reverse coupling signal of the first signal, the forward coupling signal of the second signal, and the reverse coupling signal of the second signal. The forward coupling signal of the second signal and the reverse coupling signal of the second signal may be identified based on the RF transceiver.

According to an embodiment, the electronic device 101 may further comprise an isolation circuit for providing the dual directional coupler 350 with the first signal and the second signal. The first signal the second signal outputted from the isolation circuit may be inputted a first port of the dual directional coupler 350 and may be outputted from a second port of the dual directional coupler 350. The forward coupling signal of the first signal may be outputted through a third port of the dual directional coupler 350. The reverse coupling signal of the first signal may be outputted through a fourth port of the dual directional coupler 350. The forward coupling signal of the second signal may be outputted through the third port of the dual directional coupler 350. The reverse coupling signal of the second signal may be outputted through the fourth port of the dual directional coupler 350.

According to an embodiment, the isolation circuit may comprise a single directional coupler 340. The first signal may be inputted to a first port of the single directional coupler 340 and may be outputted through a third port of the single directional coupler 340. The second signal may be inputted to a second port of the single directional coupler 340 and may be outputted through the third port of the single directional coupler 340.

According to an embodiment, the electronic device may further comprise diplexer 740. The first signal and the second signal may be inputted to the diplexer 740. The diplexer 740 may comprise a high pass filter (HPF) for passing a frequency of the first frequency band and a low pass filter (LPF) for passing a frequency of the second frequency band.

According to an embodiment, the electronic device 101 may further comprise a switching circuit 540 for providing the RF transceiver to one of an output of the third port of the dual directional coupler 350 and an output of the fourth port of the dual directional coupler 350.

According to an embodiment, the electronic device 101 may further comprising a first duplexer 330. The first signal may be radiated through the first duplexer 330, the dual directional coupler 350, and the antenna 370.

According to an embodiment, the electronic device 101 may further comprise a second PA 627, 827 and a second duplexer 635, 835. The second signal may be radiated through the second PA 627, 827, the second duplexer 635, 835, the dual directional coupler 350, and the antenna 370.

According to an embodiment, the electronic device 101 may further comprise a switching circuit 540 coupled to the fourth port of the dual directional coupler 350. The first signal may be inputted to a first port of the dual directional coupler 350 and may be outputted from a second port of the dual directional coupler 350. The second signal may be inputted to a third port of the dual directional coupler 350 and may be outputted from the second port of the dual directional coupler 350. The forward coupling signal of the first signal may be outputted through the fourth port of the dual directional coupler 350, in a first state of the switching circuit. The reverse coupling signal of the first signal may be outputted through the fourth port of the dual directional coupler 350, in a second state of the switching circuit. The forward coupling signal of the second signal may be outputted through the fourth port of the dual directional coupler 350, in the first state of the switching circuit 540. The reverse coupling signal of the second signal may be outputted through the fourth port of the dual directional coupler 350, in the second state of the switching circuit 540.

According to an embodiment, the electronic device 101 may further comprise a low-band antenna 670, 870 different from the antenna 370, a filter for the second frequency band, and a switching circuit 640, 840 for selecting one of the antenna 370 and the low-band antenna 670, 870.

According to an embodiment, the processor 310 may be configured to control the RF transceiver 320 to transmit a third signal on the second frequency band through the low-band antenna 670, 870. The second signal may be transmitted through the antenna 370 in the first state of the switching circuit 640, 840. The third signal may be transmitted through the low-band antenna 670 in the second state of the switching circuit 640, 840.

According to an embodiment, the processor 310 may be, to transmit the first signal with the second transmission power, configured to obtain a reflection coefficient based on the forwarding coupling signal of the second signal and the reverse coupling signal of the second signal. The processor 310 may be, to transmit the first signal with the second transmission power, configured to determine the second transmission power, in response to identifying that the reflection coefficient increases.

According to an embodiment, the processor 310 may, to identify the forward coupling signal of the second signal and the reverse coupling signal of the second signal, configured to identify a forward coupling signal of the first signal and a reverse coupling signal of the first signal in a first time interval, from the signals obtained from the dual directional coupler. The processor 310 may, to identify the forward coupling signal of the second signal and the reverse coupling signal of the second signal, configured to identify the forward coupling signal of the second signal and the reverse coupling signal of the second signal in a second time interval different from the first time interval, from the signals obtained from the dual directional coupler 350.

According to an embodiment, a frequency of the first frequency band may be higher than 1 gigahertz (GHz). A frequency of the second frequency band may be lower than 1 GHz.

In embodiments, a method performed by the electronic device 101 may include transmitting a first signal of a first frequency band with a first transmission power through the antenna 370. The method may include transmitting a second signal of a second frequency band lower than the first frequency band through the antenna while the first signal is transmitted. The method may include identifying the forward coupling signal of the second signal and the reverse coupling signal of the second signal among signals obtained from the dual directional coupler 350. The method may include transmitting the first signal through the antenna with a second transmission power lower than the first transmission power based at least in part on the forward coupling signal of the second signal and the reverse coupling signal of the second signal.

According to an embodiment, the signals obtained from the dual directional coupler 350 may comprise a forward coupling signal of the first signal, a reverse coupling signal of the first signal, the forward coupling signal of the second signal, and the reverse coupling signal of the second signal. The forward coupling signal of the second signal and the reverse coupling signal of the second signal may be identified based on the RF transceiver.

According to an embodiment, transmitting the first signal to the second transmission power may include obtaining a reflection coefficient based on the forward coupling signal of the second signal and the reverse coupling signal of the second signal. Transmitting the first signal to the second transmission power may include determining the second transmission power in response to identifying that the reflection coefficient is increased.

According to an embodiment, identifying the forward coupling signal of the second signal and the reverse coupling signal of the second signal may include identifying the forward coupling signal of the first signal and the reverse coupling signal of the first signal from the signals obtained from the dual directional coupler 350 in the first time interval. Identifying the forward coupling signal of the second signal and the reverse coupling signal of the second signal may include identifying the forward coupling signal of the second signal and the reverse coupling signal of the second signal from the signals obtained from the dual directional coupler 350 in a second time interval different from the first time interval.

According to an embodiment, a frequency of the first frequency band may be higher than 1 gigahertz (GHz). A frequency of the second frequency band may be lower than 1 GHz.

In embodiments, the electronic device 101 may include a processor 310, a radio frequency (RF) transceiver 320, a power amplifier (PA) 323, a single directional coupler 340 and a dual directional coupler 350 connected to the single directional coupler. The single directional coupler 340 may include a first port for receiving a first input signal, a second port for outputting a transmission signal, and a third port for receiving a second input signal. The dual directional coupler 350 may include the first port for receiving the transmission signal, the second port for outputting the transmission signal, the third port for providing the forward coupling signal of the transmission signal, and a fourth port for providing the reverse coupling signal of the transmission signa. The electronic device 101 may include an antenna 370 connected to the dual directional coupler 350 and a switch 360 for selectively connecting the third port of the dual directional coupler 350 or the fourth port of the dual directional coupler 350 to the RF transceiver 320. The first transmission port of the RF transceiver 320 may be electrically connected to the first port of the single directional coupler 340. The second transmission port of the RF transceiver 320 may be electrically connected to the third port of the single directional coupler 340.

In embodiments, the electronic device 101 may include the processor 310, the radio frequency (RF) transceiver 320, the power amplifier (PA) 323, the diplexer 740, and the dual directional coupler 350 connected to the diplexer 740. The diplexer 740 may include an input unit for receiving the first input signal and the second input signal and an output unit for outputting the transmission signal. The dual directional coupler 350 may include the first port for receiving the transmission signal, the second port for outputting the transmission signal, the third port for providing the forward coupling signal of the transmission signal, and the fourth port for providing the reverse coupling signal of the transmission signal. The electronic device 101 may include the antenna 370 connected to the dual directional coupler 350 and the switch 360 for selectively connecting the third port of the dual directional coupler 350 or the fourth port of the dual directional coupler 350 to the RF transceiver 320. The first transmission port of the RF transceiver 320 may be electrically connected to the input unit of the diplexer 740. The second transmission port of the RF transceiver 320 may be electrically connected to the input unit of the diplexer 740.

In embodiments, the electronic device may include a processor 301, the radio frequency (RF) transceiver 320, the amplifier (PA) 323, the dual directional coupler 350, and the antenna 370 connected to the dual directional coupler 350. The processor 310 may be configured to control the RF transceiver 320 to transmit a first signal of the first frequency band with a first transmission power through the PA, the dual directional coupler 350, and the antenna 370. The processor 310 may be configured to control the RF transceiver 320 to transmit a second signal of a second frequency band lower than the first frequency band through the dual directional coupler 350 and the antenna 370 while the first signal is transmitted. The processor 310 may be configured to control the RF transceiver 320 to identify the forward coupling signal of the second signal and the reverse coupling signal of the second signal among signals obtained from the dual directional coupler 350. The processor 310 may be configured to control the RF transceiver 320 to obtain the reflection coefficient based at least in part on the forward coupling signal of the second signal and the reverse coupling signal of the second signal.

In embodiments, the electronic device 101 may include the processor 310, the radio frequency (RF) transceiver 320, the power amplifier (PA) 323, the dual directional coupler 350, and the antenna 370 connected to the dual directional coupler 350. The processor 310 may be configured to control the RF transceiver 320 to transmit the first signal of the first frequency band with the first transmission power through the PA, the dual directional coupler 350, and the antenna 370. The processor 310 may be configured to control the RF transceiver 320 to transmit the second signal of the second frequency band lower than the first frequency band through the dual directional coupler 350 and the antenna 370 while the first signal is transmitted. The processor may be configured to control the RF transceiver to identify the forward coupling signal of the second signal and the reverse coupling signal of the second signal among signals obtained from the dual directional coupler 370. The processor 310 may be configured to control the RF transceiver 320 to perform a function corresponding to object detection based at least in part on the forward coupling signal of the second signal and the reverse coupling signal of the second signal.

In embodiments, the electronic device may include the processor, the radio frequency (RF) transceiver, the power amplifier (PA), the dual directional coupler, and the antenna connected to the dual directional coupler. The processor may be configured to control the RF transceiver to transmit the first signal of the first frequency band through the PA, the dual directional coupler, and the antenna, with the first transmission power. The processor may be configured to transmit the second signal of the second frequency band lower than the first frequency band through the dual directional coupler and the antenna while the first signal is transmitted. The processor may be configured to identify the forward coupling signal of the second signal and the reverse coupling signal of the second signal among signals obtained from the dual directional coupler. The processor may be configured to identify an external object is within a designated distance from the electronic device based at least in part on the forward coupling signal of the second signal and the reverse coupling signal of the second signal.

According to an embodiment, the signals obtained from the dual directional coupler may include the forward coupling signal of the first signal, the reverse coupling signal of the first signal, the forward coupling signal of the second signal, and the reverse coupling signal of the second signal. The forward coupling signal of the second signal and the reverse coupling signal of the second signal may be identified based on the radio frequency (RF) transceiver.

According to an embodiment, the processor may be configured to obtain the reflection coefficient based on the forward coupling signal of the second signal and the reverse coupling signal of the second signal in order to identify that the external object is within the designated distance from the electronic device. The processor may be configured to identify that the external object is within the designated distance from the electronic device in response to identifying that the reflection coefficient is increased in order to identify that the external object is within the designated distance from the electronic device.

According to an embodiment, the processor may be configured to identify the forward coupling signal of the first signal and the reverse coupling signal of the first signal from the signals obtained from the dual directional coupler in the first time interval in order to identify the forward coupling signal of the second signal and the reverse coupling signal of the second signal. The processor may be configured to identify the forward coupling signal of the second signal and the reverse coupling signal of the second signal from the signals obtained from the dual directional coupler in the second time interval different from the first time interval in order to identify the forward coupling signal of the second signal and the reverse coupling signal of the second signal.

According to an embodiment, the processor may be configured to transmit the first signal with a second transmission power lower than the first transmission power based on identifying that the external object is within the designated distance from the electronic device.

The electronic device according to various embodiments disclosed in the present document may be various types of devices. The electronic device may include, for example, a portable communication device (e.g., a smartphone), a computer device, a portable multimedia device, a portable medical device, a camera, a wearable device, or a home appliance. The electronic device according to an embodiment of the present document is not limited to the above-described devices.

The various embodiments and terms used herein are not intended to limit the technical features described herein to specific embodiments and should be understood to include various modifications, equivalents, or substitutes of the embodiment. With respect to the description of the drawings, similar reference numerals may be used for similar or related components. The singular form of the noun corresponding to the item may include one or more of the items unless clearly indicated differently in a related context. In this document, each of the phrases such as "A or B", "at least one of A and B", "at least one of A, B and C", "at least one of A, B, or C", and "at least one of A, B, or C" may include any one of the phrases together, or all possible combinations thereof. Terms such as "first", "second", or "second", or "second" may be used simply to distinguish a corresponding component from another corresponding component, and are not limited to other aspects (e.g., importance or order). When some (e.g., the first) component is referred to as "coupled" or "connected" in another (e.g., the second) component, with or without the term "functional" or "communicatively", it means that some of the components can be connected directly (e.g., wired), wirelessly, or through a third component.

The term "module" used in various embodiments of the present document may include a unit implemented in hardware, software, or firmware and be used interchangeably with terms such as logic, logic block, component, or circuitry, for example. The module may be a minimum unit or a part of the integrally configured component or the component that performs one or more functions. For example, according to an embodiment, the module may be implemented in the form of an application-specific integrated circuit (ASIC).

Various embodiments of the present document may be implemented as software (e.g., a program) including one or more instructions stored in a storage medium (or external memory) readable by a device (e.g., wearable device 100). For example, a processor (e.g., a processor) of a device (e.g., wearable device 100) may call and execute at least one of the one or more instructions stored from a storage medium. This makes it possible for the device to operate to perform at least one function according to at least one command called. The one or more instructions may include code generated by a compiler or code that may be executed by an interpreter. The device-readable storage medium may be provided in the form of a non-transitory storage medium. Here, the term 'non-transitory' only means that a storage medium is a device that is tangible and does not include a signal (e.g., electromagnetic wave), and the term does not distinguish between a case where data is semi-permanently stored and a case where it is temporarily stored.

According to an embodiment, a method according to various embodiments disclosed in the present document may be provided by being included in a computer program product. The computer program products may be traded between sellers and buyers as products. The computer program products may be distributed in the form of device-readable storage media (e.g., compact disc read only memory (CD-ROM), or distributed (e.g., downloaded or uploaded) directly or online through an application store (e.g., Play Store™) or between two user devices (e.g., smartphones). In the case of online distribution, at least some of the computer program products may be temporarily stored or temporarily created on a device-readable storage medium such as a manufacturer's server, a server in an application store, or a memory in a relay server.

According to various embodiments, each of the above-described components (e.g., a module or a program) may include a single object or a plurality of obj ects, and some of the plurality of objects may be separated and disposed in other components. According to various embodiments, one or more components or operations of the above-described corresponding components may be omitted, or one or more other components or operations may be added. Alternatively, or additionally, a plurality of components (e.g., modules or programs) may be integrated into one component. In this case, the integrated component may perform one or more functions of each of the components in the same or similar manner as those performed by the corresponding component among the plurality of components before the integration. According to various embodiments, operations performed by a module, a program, or other components may be executed sequentially, in parallel, repeatedly, or heuristic, performed in a different order, omitted, or one or more other operations may be added.

**Claims**

1. An electronic device, comprising:

   a processor;
   a radio frequency (RF) transceiver,
   a power amplifier (PA);
   a dual directional coupler;
   an antenna connected to the dual directional coupler,
   wherein the processor is configured to control the RF transceiver to:

      transmit a first signal of a first frequency band through the PA, the dual directional coupler, and the antenna with a first transmission power;
      transmit a second signal of a second frequency band lower than the first frequency band thorough the dual directional coupler and the antenna while the first signal is transmitted,
      identify a forward coupling signal of the second signal and a reverse coupling signal of the second signal among signals obtained from the dual directional coupler;
      transmit the first signal based at least in part on the forward coupling signal of the second signal and the reverse coupling signal of the second signal with a second transmission power being lower than the first transmission power.

**2.** The electronic device of claim 1,

wherein the signals obtained from the dual directional coupler comprises a forward coupling signal of the first signal, a reverse coupling signal of the first signal, the forward coupling signal of the second signal, and the reverse coupling signal of the second signal, and

wherein the forward coupling signal of the second signal and the reverse coupling signal of the second signal are identified based on the RF transceiver.

**3.** The electronic device of claim 1 or claim 2, further comprising:

an isolation circuit for providing the dual directional coupler with the first signal and the second signal,

wherein the first signal the second signal outputted from the isolation circuit are inputted a first port of the dual directional coupler and are outputted from a second port of the dual directional coupler,

wherein the forward coupling signal of the first signal is outputted through a third port of the dual directional coupler,

wherein the reverse coupling signal of the first signal is outputted through a fourth port of the dual directional coupler,

wherein the forward coupling signal of the second signal is outputted through the third port of the dual directional coupler, and

wherein the reverse coupling signal of the second signal is outputted through the fourth port of the dual directional coupler.

**4.** The electronic device of one of claim 3,

wherein the isolation circuit comprises a single directional coupler,

wherein the first signal is inputted to a first port of the single directional coupler and outputted through a third port of the single directional coupler, and

wherein the second signal is inputted to a second port of the single directional coupler and outputted through the third port of the single directional coupler.

**5.** The electronic device of one of claims 3 to 4, further comprising:

diplexer,

wherein the first signal and the second signal are inputted to the diplexer,

wherein the diplexer comprises a high pass filter (HPF) for passing a frequency of the first frequency band and a low pass filter (LPF) for passing a frequency of the second frequency band.

**6.** The electronic device of one of claims 3 to 5, further comprising;

a switching circuit for providing the RF transceiver to one of an output of the third port of the dual directional coupler and an output of the fourth port of the dual directional coupler.

**7.** The electronic device of one of claims 1 to 6, further comprising:

a first duplexer,

wherein the first signal is radiated through the first duplexer, the dual directional coupler, and the antenna.

**8.** The electronic device of one of claims 1 to 7, further comprising:

a second PA and a second duplexer,

wherein the second signal is radiated through the second PA, the second duplexer, the dual directional coupler, and the antenna.

**9.** The electronic device of one of claims 1 to 8, further comprising:

a switching circuit coupled to the fourth port of the dual directional coupler,

wherein the first signal is inputted to a first port of the dual directional coupler and is outputted from a second port of the dual directional coupler,

wherein the second signal is inputted to a third port of the dual directional coupler and is outputted from the second port of the dual directional coupler,
wherein the forward coupling signal of the first signal is outputted through the fourth port of the dual directional coupler, in a first state of the switching circuit,
wherein the reverse coupling signal of the first signal is outputted through the fourth port of the dual directional coupler, in a second state of the switching circuit,
wherein the forward coupling signal of the second signal is outputted through the fourth port of the dual directional coupler, in the first state of the switching circuit, and
wherein the reverse coupling signal of the second signal is outputted through the fourth port of the dual directional coupler, in the second state of the switching circuit.

10. The electronic device of one of claims 1 to 9, further comprising:

a low-band antenna different from the antenna;
a filter for the second frequency band; and
a switching circuit for selecting one of the antenna and the low-band antenna.

11. The electronic device of one of claims 1 to 10,

wherein the processor is configured to control the RF transceiver to transmit a third signal on the second frequency band through the low-band antenna,
wherein the second signal is transmitted through the antenna in the first state of the switching circuit, and
wherein the third signal is transmitted through the low-band antenna in the second state of the switching circuit.

12. The electronic device of one of claims 1 to 11,
wherein the processor is, to transmit the first signal with the second transmission power, configured to:

obtain a reflection coefficient based on the forwarding coupling signal of the second signal and the reverse coupling signal of the second signal, and
determine the second transmission power, in response to identifying that the reflection coefficient increases.

13. The electronic device of one of claims 1 to 12, wherein the processor is, to identify the forward coupling signal of the second signal and the reverse coupling signal of the second signal, configured to:

identify a forward coupling signal of the first signal and a reverse coupling signal of the first signal in a first time interval, from the signals obtained from the dual directional coupler, and
identify the forward coupling signal of the second signal and the reverse coupling signal of the second signal in a second time interval different from the first time interval, from the signals obtained from the dual directional coupler;

14. The electronic device of one of claims 1 to 13,

wherein a frequency of the first frequency band is higher than 1 gigahertz (GHz), and
wherein a frequency of the second frequency band is lower than 1 GHz.

15. The electronic device of one of claims 1 to 14, further comprising:

a single directional coupler connected between the RF transceiver and the dual directional coupler,
wherein the single directional coupler comprising:

a first port for receiving a first input signal,
a second port for outputting a transmission signal, and
a third port for receiving a second input signal,

wherein the dual directional coupler comprises:

a first port for receiving the transmission signal,
a second port for outputting the transmission signal,
a third port for providing a forward coupling signal of the transmission signal, and

a fourth port for providing a reverse coupling signal of the transmission signal, and

a switch for connecting the RF transceiver to the third port of the dual directional coupler or the fourth port of the dual directional coupler selectively,
wherein a first transmission port of the RF transceiver is electrically connected to the first port of the single directional coupler, and
wherein a second transmission port of the RF transceiver is electrically connected to the third port of the single directional coupler.

100

ELECTRONIC DEVICE 101

INPUT MODULE 150

DISPLAY MODULE 160

SOUND OUTPUT MODULE 155

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

PROCESSOR 120

MAIN PROCESSOR 121

AUXILIARY PROCESSOR 123

POWER MANAGE-MENT MODULE 188

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

INTERFACE 177

CONNECTING TERMINAL 178

HAPTIC MODULE 179

CAMERA MODULE 180

SECOND NETWORK 199

ELECTRONIC DEVICE 104

FIRST NETWORK 198

ELECTRONIC DEVICE 102

SERVER 108

FIG. 1

27

FIG. 2A

FIG. 2B

FIG. 3

FIG. 4

FIG. 5

FIG. 6A

FIG. 6B

FIG. 7

FIG. 8A

FIG. 8B

921 922

911

923

F

912

R

900

FIG. 9

FIG. 10

```
┌─────────────────────────────────────────────────────┐
│   TRANSMIT FIRST SIGNAL IN FIRST FREQUENCY BAND       │──╮  1101
│         WITH FIRST TRANSMISSION POWER                 │
└─────────────────────────────────────────────────────┘
                         │
                         ▼
┌─────────────────────────────────────────────────────┐
│  TRANSMIT SECOND SIGNAL IN SECOND FREQUENCY BAND      │──╮  1103
│        WHILE FIRST SIGNAL IS TRANSMITTED              │
└─────────────────────────────────────────────────────┘
                         │
                         ▼
┌─────────────────────────────────────────────────────┐
│  IDENTIFY FORWARD COUPLING SIGNAL OF SECOND SIGNAL    │──╮  1105
│   AND REVERSE COUPLING SIGNAL OF SECOND SIGNAL        │
└─────────────────────────────────────────────────────┘
                         │
                         ▼
┌─────────────────────────────────────────────────────┐
│ DETERMINE SECOND TRANSMISSION POWER LOWER THAN FIRST  │──╮  1107
│ TRANSMISSION POWER BASED AT LEAST IN PART ON FORWARD  │
│ COUPLING SIGNAL OF SECOND SIGNAL AND REVERSE COUPLING │
│          SIGNAL OF SECOND SIGNAL                      │
└─────────────────────────────────────────────────────┘
                         │
                         ▼
┌─────────────────────────────────────────────────────┐
│   TRANSMIT FIRST SIGNAL IN FIRST FREQUENCY BAND       │──╮  1109
│        WITH SECOND TRANSMISSION POWER                 │
└─────────────────────────────────────────────────────┘
```

FIG. 11

START

OBTAIN FORWARD COUPLING SIGNAL
OF SECOND SIGNAL                    ~1201

OBTAIN REVERSE COUPLING SIGNAL
OF SECOND SIGNAL                    ~1203

CALCULATE REFLECTION COEFFICIENT   ~1205

1207
WHETHER CHANGE
IS GREATER THAN OR EQUAL TO         NO
THRESHOLD VALUE?

YES

CHANGE TRANSMISSION POWER OF FIRST SIGNAL   ~1209

END

FIG. 12

RECEIVE FORWARD COUPLING SIGNAL ~1301

IDENTIFY FORWARD COUPLING SIGNAL
OF SECOND SIGNAL ~1303

RECEIVE REVERSE COUPLING SIGNAL ~1305

IDENTIFY REVERSE COUPLING SIGNAL
OF SECOND SIGNAL ~1307

FIG. 13

1400

Free

7mm

0mm

FIG. 14A

FIG. 14B

## INTERNATIONAL SEARCH REPORT

| International application No. |
| --- |
| **PCT/KR2023/008225** |

**A.    CLASSIFICATION OF SUBJECT MATTER**

**H04B 1/50**(2006.01)i; **H04B 1/04**(2006.01)i; **H04B 1/3827**(2015.01)i; **H04B 1/00**(2006.01)i; **H04B 1/40**(2006.01)i

According to International Patent Classification (IPC) or to both national classification and IPC

**B.    FIELDS SEARCHED**

Minimum documentation searched (classification system followed by classification symbols)

H04B 1/50(2006.01); H03F 1/02(2006.01); H03F 3/24(2006.01); H03H 7/01(2006.01); H04B 1/3827(2015.01);
H04B 1/40(2006.01); H04B 1/401(2015.01); H04B 7/0404(2017.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 역방향 커플링 신호(reverse directional coupling signal), 트랜시버 (transceiver), 송신 전력(transmit power), 양방향 커플러(dual directional coupler)

**C.    DOCUMENTS CONSIDERED TO BE RELEVANT**

| Category* | Citation of document, with indication, where appropriate, of the relevant passages | Relevant to claim No. |
| --- | --- | --- |
| Y | US 6710651 B2 (FORRESTER, Tim) 23 March 2004 (2004-03-23)<br>    See column 5, lines 3-9 and column 7, line 3 – column 8, line 29; claim 1; and figures 1 and 3-5. | 1-2,7-8,10-14 |
| A | | 3-6,9,15 |
| Y | KR 10-2020-0063022 A (SAMSUNG ELECTRONICS CO., LTD.) 04 June 2020 (2020-06-04)<br>    See paragraphs [0026]-[0027] and [0073]; and figures 2 and 16. | 1-2,7-8,10-14 |
| A | KR 10-2020-0048228 A (SAMSUNG ELECTRONICS CO., LTD.) 08 May 2020 (2020-05-08)<br>    See paragraphs [0038]-[0047]; claim 1; and figure 2. | 1-15 |
| A | US 2020-0044612 A1 (ADVANCED MICRO DEVICES, INC.) 06 February 2020 (2020-02-06)<br>    See paragraphs [0008]-[0012]; claim 1; and figure 1. | 1-15 |
| A | US 2020-0321997 A1 (MURATA MANUFACTURING CO., LTD.) 08 October 2020 (2020-10-08)<br>    See paragraphs [0016]-[0028]; claim 1; and figure 1. | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 October 2023** | **10 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/008225**

| Patent document cited in search report | | | Publication date (day/month/year) | Patent family member(s) | | | Publication date (day/month/year) |
|---|---|---|---|---|---|---|---|
| US | 6710651 | B2 | 23 March 2004 | US | 2003-0076168 | A1 | 24 April 2003 |
| | | | | US | 2005-0093624 | A1 | 05 May 2005 |
| | | | | US | 7071776 | B2 | 04 July 2006 |
| KR | 10-2020-0063022 | A | 04 June 2020 | CN | 111224703 | A | 02 June 2020 |
| | | | | DE | 102019124713 | A1 | 28 May 2020 |
| | | | | TW | 202114451 | A | 01 April 2021 |
| | | | | US | 11129115 | B2 | 21 September 2021 |
| | | | | US | 2020-0169967 | A1 | 28 May 2020 |
| | | | | US | 2021-0385763 | A1 | 09 December 2021 |
| KR | 10-2020-0048228 | A | 08 May 2020 | KR | 10-2556360 | B1 | 17 July 2023 |
| | | | | US | 2021-0377881 | A1 | 02 December 2021 |
| | | | | WO | 2020-091276 | A1 | 07 May 2020 |
| US | 2020-0044612 | A1 | 06 February 2020 | CN | 112534725 | A | 19 March 2021 |
| | | | | EP | 3830964 | A1 | 09 June 2021 |
| | | | | EP | 3830964 | A4 | 20 April 2022 |
| | | | | JP | 2021-532674 | A | 25 November 2021 |
| | | | | KR | 10-2021-0027438 | A | 10 March 2021 |
| | | | | WO | 2020-028042 | A1 | 06 February 2020 |
| US | 2020-0321997 | A1 | 08 October 2020 | CN | 211606532 | U | 29 September 2020 |
| | | | | JP | 2020-170919 | A | 15 October 2020 |
| | | | | KR | 10-2020-0116851 | A | 13 October 2020 |
| | | | | KR | 10-2297728 | B1 | 03 September 2021 |
| | | | | US | 11601153 | B2 | 07 March 2023 |
| | | | | US | 2023-0027206 | A1 | 26 January 2023 |

Form PCT/ISA/210 (patent family annex) (July 2022)